# EUROPEAN PATENT SPECIFICATION

(11) **EP 4 265 490 B1**
(45) Date of publication and mention of the grant of the patent: **07.05.2025**
(21) Application number: 21824023.2
(22) Date of filing: 24.11.2021
(51) Int. Cl.: B60T 8/172

(54) **HYDRAULIC PRESSURE CONTROL DEVICE AND STRADDLE-TYPE VEHICLE**
HYDRAULISCHES DRUCKSTEUERGERÄT UND ZWEIRAD-FAHRZEUG
DISPOSITIF DE COMMANDE DE PRESSION HYDRAULIQUE ET VEHICULE DE TYPE DEUX-ROUES

(30) Priority: 17.12.2020 JP 2020209560
(43) Date of publication of application: 25.10.2023
(73) Proprietor: Robert Bosch GmbH, 70442 Stuttgart (DE)
(72) Inventor: ATSUSHI, Hiroaki, Yokohama-shi, Kanagawa 224-8501 (JP); SAGAYAMA, Kosaku, Yokohama-shi, Kanagawa 224-8501 (JP)
(86) International application number: PCT/IB2021/060907
(87) International publication number: WO 2022/130072

(56) References cited:
- EP-A1- 2 119 609
- EP-A1- 2 857 268
- JP-A- 2009 234 502
- JP-A- 2010 254 208

## Description

### Technical Field

The present invention relates to a hydraulic pressure control device used in a brake system equipped in a straddle-type vehicle and a straddle-type vehicle provided with the hydraulic pressure control device.

### Background Art

In the related art, a straddle-type vehicle is provided with a brake system capable of executing anti-lock brake control, which is to control the braking force of a vehicle wheel by controlling the hydraulic pressure of a brake fluid. The brake system includes a hydraulic pressure control device. In addition, a hydraulic pressure control device in which a base body having an internal flow path through which a brake fluid flows and a master cylinder are integrated with each other has been proposed as a hydraulic pressure control device of the related art used in a brake system capable of executing anti-lock brake control (see PTL 1).

Specifically, the internal flow path as a part of a brake flow path allowing the master cylinder and a wheel cylinder to communicate with each other is formed in the master cylinder-integrated base body. Also formed in the master cylinder-integrated base body are a piston mounting hole where the piston of the master cylinder is provided so as to be capable of reciprocating, a reservoir tank for brake fluid storage connected to the piston mounting hole, an inlet valve mounting hole where an inlet valve is provided, and an outlet valve mounting hole where an outlet valve is provided. It should be noted that the inlet valve opens and closes the part of the internal flow path through which the brake fluid flowing from the piston mounting hole to the wheel cylinder passes. In addition, the outlet valve opens and closes the part of the internal flow path through which the brake fluid flowing from the wheel cylinder to an accumulator (part storing the brake fluid released from the wheel cylinder during pressure decrease in anti-lock brake control) passes.

In the hydraulic pressure control device provided with the master cylinder-integrated base body, the piston of the master cylinder is pressed by a rider gripping a brake lever with his or her hand. Accordingly, the hydraulic pressure control device provided with the master cylinder-integrated base body is mounted to the handlebar of a straddle-type vehicle.

### Citation List

### Patent Literature

PTL 1: JP-B-4783391
PTL 2: JP 2010 254208 A
PTL 3: JP 2009 234502 A
PTL 4: EP 857 268 A1
PTL 5: EP 2 119 609 A1

### Summary of Invention

### Technical Problem

In the hydraulic pressure control device of the related art provided with the master cylinder-integrated base body, the inlet valve mounting hole and the outlet valve mounting hole are formed in the base body so as to extend in a substantially horizontal direction with the hydraulic pressure control device mounted to the handlebar. In other words, in the hydraulic pressure control device of the related art provided with the master cylinder-integrated base body, the inlet valve mounting hole and the outlet valve mounting hole are open to the front, rear, or side of the straddle-type vehicle when the hydraulic pressure control device is mounted to the handlebar.

Here, in the hydraulic pressure control device provided with the master cylinder-integrated base body, a housing storing a coil as an inlet valve drive source, a coil as an outlet valve drive source, and a control board controlling the energization of the coils is disposed so as to face the surface of the base body where the inlet valve mounting hole and the outlet valve mounting hole are open. In other words, as for the hydraulic pressure control device of the related art provided with the master cylinder-integrated base body, it is imperative to ensure a housing disposition space in front of, behind, or beside the hydraulic pressure control device in mounting the hydraulic pressure control device on the handlebar. However, as for the straddle-type vehicle, various objects are provided in front of, behind, and beside the mounting position of the hydraulic pressure control device. Accordingly, the hydraulic pressure control device of the related art provided with the master cylinder-integrated base body is problematic in that the degree of freedom of mounting on a straddle-type vehicle is low.

The present invention has been made in view of the above, and an object of the present invention is to obtain a hydraulic pressure control device with which the degree of freedom of mounting on a straddle-type vehicle can be improved as compared with the related art. Another object of the present invention is to obtain a straddle-type vehicle provided with such a hydraulic pressure control device. Solution to Problem

A hydraulic pressure control device according to the present invention is provided, as defined by independent claim 1. The hydraulic pressure control device is used in a brake system capable of executing anti-lock brake control and mounted to a handlebar of a straddle-type vehicle. The hydraulic pressure control device has a configuration in which a brake fluid released from a wheel cylinder during pressure decrease in the anti-lock brake control is stored in an accumulator and the brake fluid in the accumulator is pumplessly discharged out of the accumulator and includes: a master cylinder-integrated base body where a piston mounting hole where a piston of a master cylinder is provided so as to be capable of reciprocating, a reservoir tank for brake fluid storage connected to the piston mounting hole, and an internal flow path as a part of a brake fluid flow path allowing the piston mounting hole and the wheel cylinder to communicate with each other are formed; an inlet valve provided in an inlet valve mounting hole formed in the base body so as to be capable of reciprocating and opening and closing a part of the internal flow path through which a brake fluid flowing from the piston mounting hole to the wheel cylinder passes; and an outlet valve provided in an outlet valve mounting hole formed in the base body so as to be capable of reciprocating and opening and closing a part of the internal flow path through which a brake fluid flowing from the wheel cylinder to the accumulator passes, in which the inlet valve mounting hole and the outlet valve mounting hole are open on a second surface in a case where a surface of the base body where an opening portion of the reservoir tank is formed is a first surface and a surface of the base body opposite to the first surface is the second surface. The hydraulic pressure control device further comprises a pressure sensor provided in a pressure sensor mounting hole formed in the base body and detecting pressure of a brake fluid in the internal flow path. The pressure sensor mounting hole is open on the second surface.

In addition, a straddle-type vehicle according to the present invention includes the hydraulic pressure control device according to the present invention.

### Advantageous Effects of Invention

In the base body of the hydraulic pressure control device according to the present invention, the inlet valve mounting hole and the outlet valve mounting hole are open on the second surface opposite to the opening portion of the reservoir tank. When the hydraulic pressure control device is mounted to the handlebar of the straddle-type vehicle, the surface of the base body where the opening portion of the reservoir tank is formed (first surface) faces upward. In other words, when the hydraulic pressure control device according to the present invention is mounted to the handlebar of the straddle-type vehicle, the second surface of the base body faces downward. Accordingly, when the hydraulic pressure control device according to the present invention is mounted to the handlebar of the straddle-type vehicle, a coil, a control board, and a housing are disposed below the base body. Here, in the straddle-type vehicle, there is a spatial margin in the vertical direction around the mounting position of the hydraulic pressure control device as compared with the front, rear, and side where various objects are provided. Accordingly, the degree of freedom of mounting on the straddle-type vehicle is improved as compared with the related art with the hydraulic pressure control device according to the present invention.

### Brief Description of Drawings

Fig. 1 is a side view illustrating a schematic configuration of a bicycle equipped with a brake system according to an embodiment of the present invention.
Fig. 2 is a plan view illustrating the periphery of a handlebar of the bicycle equipped with the brake system according to the embodiment of the present invention.
Fig. 3 is a diagram illustrating a schematic configuration of the brake system according to the embodiment of the present invention.
Fig. 4 is a block diagram illustrating a front wheel-side hydraulic pressure control device according to the embodiment of the present invention.
Fig. 5 is a block diagram illustrating a rear wheel-side hydraulic pressure control device according to the embodiment of the present invention.
Fig. 6 is a perspective view illustrating the front wheel-side hydraulic pressure control device according to the embodiment of the present invention.
Fig. 7 is a vertical cross-sectional view of the front wheel-side hydraulic pressure control device according to the embodiment of the present invention.
Fig. 8 is a bottom view illustrating a base body of the front wheel-side hydraulic pressure control device according to the embodiment of the present invention.
Fig. 9 is a diagram illustrating a schematic configuration of a modification example of the brake system according to the embodiment of the present invention.
Fig. 10 is a block diagram illustrating the modification example of the brake system according to the embodiment of the present invention.
Fig. 11 is a side view illustrating a schematic configuration of a bicycle equipped with the modification example of the brake system according to the embodiment of the present invention.

### Description of Embodiments

Hereinafter, a hydraulic pressure control device according to the present invention, a brake system provided with the hydraulic pressure control device, and a straddle-type vehicle provided with the hydraulic pressure control device will be described with reference to the drawings.

It should be noted that a case where the present invention is adopted for a bicycle (such as two-wheeled and three-wheeled vehicles) will be described below. Alternatively, the present invention may be adopted for a straddle-type vehicle other than a bicycle. The straddle-type vehicle means every vehicle ridden by a straddling rider. Examples of the straddle-type vehicle other than a bicycle include an automatic two-wheeled vehicle, an automatic three-wheeled vehicle, and a buggy using at least one of an engine and an electric motor as a drive source. In addition, the bicycle means every vehicle that can be propelled on the road by pedal effort. In other words, the bicycle includes ordinary, electrically assisted, and electric bicycles. In addition, the automatic two-wheeled or three-wheeled vehicle means a so-called motorcycle and the motorcycle includes an autobike, a scooter, and an electric scooter.

In addition, the following configuration, operation, and so on are examples and the hydraulic pressure control device, the brake system, and the straddle-type vehicle according to the present invention are not limited thereto. For example, in the following description, the brake system according to the present invention includes front wheel-side and rear wheel-side hydraulic pressure control devices for executing anti-lock brake control on front and rear wheels, respectively. However, the brake system according to the present invention may include only one of the front wheel-side hydraulic pressure control device and the rear wheel-side hydraulic pressure control device. In addition, the brake system according to the present invention may, for example, execute anti-lock brake control on both the front and rear wheels using one hydraulic pressure control device.

In addition, in the drawings, the same or similar members or parts are denoted by the same reference numerals or lack reference numerals. In addition, the illustration is simplified or omitted as appropriate regarding a detailed structure. In addition, redundant description is simplified or omitted as appropriate.

### <Equipping Bicycle with Brake System>

Equipping a bicycle with a brake system according to an embodiment will be described.

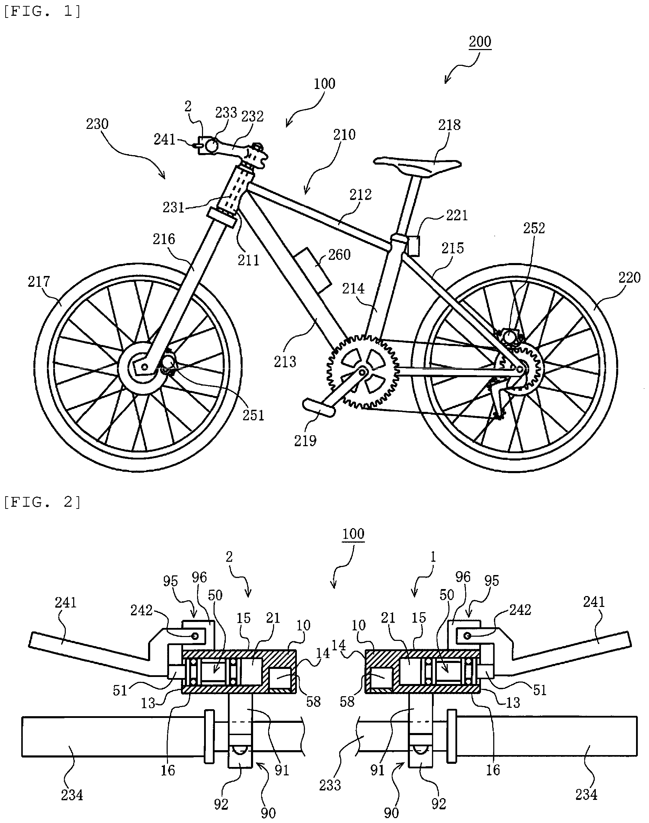

Fig. 1 is a side view illustrating a schematic configuration of the bicycle equipped with the brake system according to the embodiment of the present invention. Fig. 2 is a plan view illustrating the periphery of a handlebar of the bicycle equipped with the brake system according to the embodiment of the present invention. It should be noted that the left side of the page is the front of a bicycle 200 in Fig. 1. In addition, in Fig. 2, the upper side of the page is the front of the bicycle 200. In addition, Fig. 2 illustrates a state where brake levers 241 are not gripped by a rider. In addition, in Fig. 2, a front wheel-side hydraulic pressure control device 1 and a rear wheel-side hydraulic pressure control device 2 are illustrated in cross section in part.

The bicycle 200 equipped with a brake system 100 includes a frame 210, a turning portion 230, a saddle 218, a pedal 219, a rear wheel 220, a rear wheel-side braking portion 252, and a brake lamp 221.

The frame 210 includes, for example, a head tube 211 axially supporting a steering column 231 of the turning portion 230, a top tube 212 and a down tube 213 connected to the head tube 211, a seat tube 214 connected to the top tube 212 and the down tube 213 and holding the saddle 218, and a stay 215 connected to the upper and lower ends of the seat tube 214 and holding the rear wheel 220 and the rear wheel-side braking portion 252.

The turning portion 230 includes, for example, the steering column 231, a handle stem 232 held by the steering column 231, a handlebar 233 held by the handle stem 232, the brake levers 241 provided around the handlebar 233, front forks 216 connected to the steering column 231, a front wheel 217 rotatably held by the front forks 216, and a front wheel-side braking portion 251. The front forks 216 are provided on both sides of the front wheel 217. One end of the front forks 216 is connected to the steering column 231, and the other end of the front forks 216 is connected to the center of rotation of the front wheel 217. In other words, the front wheel 217 is rotatably held between the pair of front forks 216. It should be noted that the front fork 216 may be a front fork equipped with a suspension system.

The bicycle 200 according to the present embodiment includes the two brake levers 241. Specifically, as illustrated in Fig. 2, the brake system 100 includes the front wheel-side hydraulic pressure control device 1 for executing anti-lock brake control on the front wheel 217 and the rear wheel-side hydraulic pressure control device 2 for executing anti-lock brake control on the rear wheel 220. The front wheel-side hydraulic pressure control device 1 and the rear wheel-side hydraulic pressure control device 2 include master cylinder-integrated base bodies 10 as will be described later. A hydraulic pressure control device provided with a master cylinder-integrated base body is mounted to a handlebar and has a configuration in which the piston of the master cylinder is pressed by a brake lever hand-gripped by a rider. Accordingly, the front wheel-side hydraulic pressure control device 1 and the rear wheel-side hydraulic pressure control device 2 are mounted to the handlebar 233. The bicycle 200 includes the brake lever 241 for the front wheel-side hydraulic pressure control device 1 and the brake lever 241 for the rear wheel-side hydraulic pressure control device 2.

In a case where both the front wheel-side hydraulic pressure control device 1 and the rear wheel-side hydraulic pressure control device 2 are mounted to the handlebar 233, one of the front wheel-side hydraulic pressure control device 1 and the rear wheel-side hydraulic pressure control device 2 is provided around one grip portion 234 (grip portion 234 on the left side), which the rider grips with his or her left hand, of the handlebar 233. In addition, the other of the front wheel-side hydraulic pressure control device 1 and the rear wheel-side hydraulic pressure control device 2 is provided around the other grip portion 234 (grip portion 234 on the right side), which the rider grips with his or her right hand, of the handlebar 233. Accordingly, when the bicycle 200 is equipped with the brake system 100 according to the present embodiment, the weight distribution of the attachment to the handlebar 233 in the left-right direction becomes more even than in the related art and the steerability of the bicycle 200 is improved as compared with the related art. It should be noted that Fig. 2 illustrates an example in which the rear wheel-side hydraulic pressure control device 2 is provided around the grip portion 234 that the rider grips with his or her left hand and the front wheel-side hydraulic pressure control device 1 is provided around the grip portion 234 that the rider grips with his or her right hand.

A power source unit 260 as a power source for the front wheel-side hydraulic pressure control device 1 and the rear wheel-side hydraulic pressure control device 2 is mounted to, for example, the down tube 213 of the frame 210. The power source unit 260 may be a battery or a generator. Examples of the generator include a generator generating electricity by the bicycle 200 traveling (such as a hub dynamo generating electricity by the front wheel 217 or the rear wheel 220 rotating and a generator performing regenerative power generation as an electric motor of a drive source for the front wheel 217 or the rear wheel 220) and a generator generating electricity from sunlight.

In other words, the bicycle 200 is equipped with the brake system 100 including at least the brake lever 241, the front wheel-side braking portion 251, the rear wheel-side braking portion 252, the front wheel-side hydraulic pressure control device 1, the rear wheel-side hydraulic pressure control device 2, and the power source unit 260. The brake system 100 is capable of executing anti-lock brake control on the front wheel 217 by controlling the pressure of the brake fluid of the front wheel-side braking portion 251 with the front wheel-side hydraulic pressure control device 1. In addition, the brake system 100 is capable of executing anti-lock brake control on the rear wheel 220 by controlling the pressure of the brake fluid of the rear wheel-side braking portion 252 with the rear wheel-side hydraulic pressure control device 2.

The brake lamp 221 emits light when at least one of the front wheel 217 and the rear wheel 220 is braked.

### <Configuration of Brake System>

The configuration of the brake system according to the embodiment will be described.

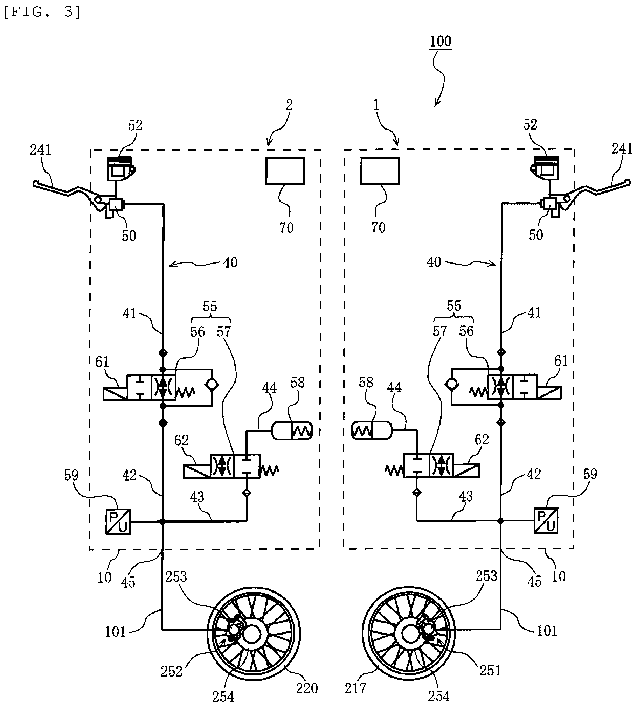

Fig. 3 is a diagram illustrating a schematic configuration of the brake system according to the embodiment of the present invention.

As described above, the brake system 100 includes the front wheel-side hydraulic pressure control device 1 and the rear wheel-side hydraulic pressure control device 2. The front wheel-side hydraulic pressure control device 1 and the rear wheel-side hydraulic pressure control device 2 include the master cylinder-integrated base bodies 10. Specifically, as will be described in detail later, the base body 10 is formed with a piston mounting hole 21 where a piston 51 of a master cylinder 50 is provided so as to be capable of reciprocating. The master cylinder 50 is configured by the piston mounting hole 21 and the piston 51. In addition, the base body 10 is formed with a wheel cylinder port 45 and an internal flow path 40 allowing the piston mounting hole 21 and the wheel cylinder port 45 to communicate with each other. In addition, the base body 10 is formed with a reservoir tank 52 for brake fluid storage connected to the piston mounting hole 21.

The internal flow path 40 is a brake fluid flow path. The internal flow path 40 includes, for example, a first flow path 41, a second flow path 42, a third flow path 43, and a fourth flow path 44. The piston mounting hole 21 of the master cylinder 50 and the wheel cylinder port 45 communicate with each other via the first flow path 41 and the second flow path 42. In addition, the inlet-side end portion of the third flow path 43 is connected to the middle portion of the second flow path 42.

The front wheel-side braking portion 251 is connected via a liquid pipe 101 to the wheel cylinder port 45 of the base body 10 of the front wheel-side hydraulic pressure control device 1. The front wheel-side braking portion 251 includes a wheel cylinder 253 and a rotor 254. The wheel cylinder 253 of the front wheel-side braking portion 251 is mounted to, for example, the front fork 216. The wheel cylinder 253 of the front wheel-side braking portion 251 includes a piston portion (not illustrated) moving in conjunction with the pressure of the liquid pipe 101 and is connected to the outlet side of the second flow path 42 of the front wheel-side hydraulic pressure control device 1 via the liquid pipe 101 and the wheel cylinder port 45. In other words, the wheel cylinder port 45 of the base body 10 of the front wheel-side hydraulic pressure control device 1 is connected to the liquid pipe 101 communicating with the wheel cylinder 253 of the front wheel-side braking portion 251. The rotor 254 of the front wheel-side braking portion 251 is held by the front wheel 217 and rotates together with the front wheel 217. As a result of the movement of the piston portion of the wheel cylinder 253 of the front wheel-side braking portion 251, a brake pad (not illustrated) is pressed against the rotor 254 of the front wheel-side braking portion 251 and the front wheel 217 is braked.

The rear wheel-side braking portion 252 is connected via the liquid pipe 101 to the wheel cylinder port 45 of the base body 10 of the rear wheel-side hydraulic pressure control device 2. The rear wheel-side braking portion 252 includes the wheel cylinder 253 and the rotor 254 as in the case of the front wheel-side braking portion 251. The wheel cylinder 253 of the rear wheel-side braking portion 252 is mounted to, for example, the stay 215. The wheel cylinder 253 of the rear wheel-side braking portion 252 includes a piston portion (not illustrated) moving in conjunction with the pressure of the liquid pipe 101 and is connected to the outlet side of the second flow path 42 of the rear wheel-side hydraulic pressure control device 2 via the liquid pipe 101 and the wheel cylinder port 45. In other words, the wheel cylinder port 45 of the base body 10 of the rear wheel-side hydraulic pressure control device 2 is connected to the liquid pipe 101 communicating with the wheel cylinder 253 of the rear wheel-side braking portion 252. The rotor 254 of the rear wheel-side braking portion 252 is held by the rear wheel 220 and rotates together with the rear wheel 220. As a result of the movement of the piston portion of the wheel cylinder 253 of the rear wheel-side braking portion 252, a brake pad (not illustrated) is pressed against the rotor 254 of the rear wheel-side braking portion 252 and the rear wheel 220 is braked.

In other words, the internal flow path 40 formed in the base body 10 of the front wheel-side hydraulic pressure control device 1 and the rear wheel-side hydraulic pressure control device 2 is a part of the brake fluid flow path that allows the piston mounting hole 21 and the wheel cylinder 253 to communicate with each other.

In addition, the front wheel-side hydraulic pressure control device 1 and the rear wheel-side hydraulic pressure control device 2 are provided with a control valve 55 opening and closing the internal flow path 40 and adjusting the pressure of the brake fluid supplied to the wheel cylinder 253. The control valve 55 is provided in the base body 10. In the present embodiment, the front wheel-side hydraulic pressure control device 1 and the rear wheel-side hydraulic pressure control device 2 include an inlet valve 56 and an outlet valve 57 as the control valve 55.

The inlet valve 56 is provided between the outlet side of the first flow path 41 and the inlet side of the second flow path 42 and opens and closes the brake fluid flow between the first flow path 41 and the second flow path 42. In other words, the inlet valve 56 opens and closes the part of the internal flow path 40 through which the brake fluid flowing from the piston mounting hole 21 to the wheel cylinder 253 passes. The outlet valve 57 is provided between the outlet side of the third flow path 43 and the inlet side of the fourth flow path 44 and opens and closes the brake fluid flow between the third flow path 43 and the fourth flow path 44. The pressure of the brake fluid is controlled by the opening and closing operation of the inlet valve 56 and the outlet valve 57.

In addition, the front wheel-side hydraulic pressure control device 1 and the rear wheel-side hydraulic pressure control device 2 include a first coil 61 as a drive source for the inlet valve 56 and a second coil 62 as a drive source for the outlet valve 57. For example, when the first coil 61 is in a non-energized state, the inlet valve 56 opens the flow of the brake fluid in both directions. When the first coil 61 is energized, the inlet valve 56 is closed and shuts off the flow of the brake fluid. In other words, in the present embodiment, the inlet valve 56 is an electromagnetic valve that is open when not energized. In addition, the outlet valve 57 shuts off the flow of the brake fluid when, for example, the second coil 62 is in a non-energized state. When the second coil 62 is energized, the outlet valve 57 is opened and opens the flow of the brake fluid in both directions. In other words, in the present embodiment, the outlet valve 57 is an electromagnetic valve that is closed when not energized.

In addition, an accumulator 58 is formed in the base body 10 of the front wheel-side hydraulic pressure control device 1 and the rear wheel-side hydraulic pressure control device 2. The accumulator 58 is connected to the outlet side of the fourth flow path 44 and stores the brake fluid that has passed through the outlet valve 57. In other words, the outlet valve 57 opens and closes the part of the internal flow path 40 through which the brake fluid flowing from the wheel cylinder 253 to the accumulator 58 passes.

In addition, the front wheel-side hydraulic pressure control device 1 and the rear wheel-side hydraulic pressure control device 2 include a pressure sensor 59 detecting the pressure of the brake fluid in the internal flow path 40. The pressure sensor 59 is provided in the base body 10. In the present embodiment, the pressure sensor 59 detects the pressure of the brake fluid that applies pressure to the wheel cylinder 253. For example, the pressure sensor 59 communicates with the second flow path 42.

In addition, the front wheel-side hydraulic pressure control device 1 and the rear wheel-side hydraulic pressure control device 2 include a control device 70 controlling the opening and closing operation of the control valve 55 based on the detection result of the pressure sensor 59. It should be noted that each unit of the control device 70 may be arranged together or dispersedly. In addition, at least a part of the control device 70 of the front wheel-side hydraulic pressure control device 1 and at least a part of the control device 70 of the rear wheel-side hydraulic pressure control device 2 may be arranged together. The control device 70 may be configured to include, for example, a microcomputer and a microprocessor unit, may be configured to include what is updatable such as firmware, or may be configured to include, for example, a program module executed by a command from a CPU or the like. For example, the control device 70 of the front wheel-side hydraulic pressure control device 1 and the rear wheel-side hydraulic pressure control device 2 is configured as follows.

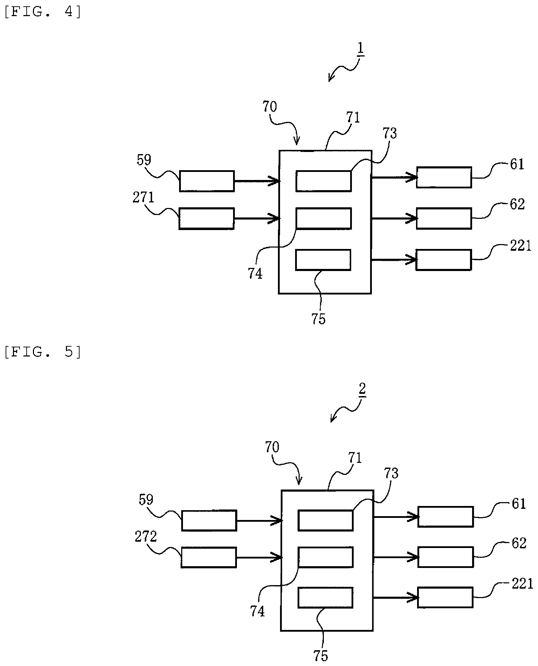

Fig. 4 is a block diagram illustrating the front wheel-side hydraulic pressure control device according to the embodiment of the present invention. In addition, Fig. 5 is a block diagram illustrating the rear wheel-side hydraulic pressure control device according to the embodiment of the present invention.

The detection result of the pressure sensor 59 is input to the control device 70 of the front wheel-side hydraulic pressure control device 1 and the rear wheel-side hydraulic pressure control device 2. In addition, in the present embodiment, the detection result of a front wheel-side vehicle wheel speed sensor 271 detecting the rotation speed of the front wheel 217 as a detection device detecting information on the traveling state of the bicycle 200 is input to the control device 70 of the front wheel-side hydraulic pressure control device 1. Then, the control device 70 of the front wheel-side hydraulic pressure control device 1 determines whether the front wheel 217 is locked or the possibility of the front wheel 217 being locked based on the detection result of the front wheel-side vehicle wheel speed sensor 271. In addition, in the present embodiment, the detection result of a rear wheel-side vehicle wheel speed sensor 272 detecting the rotation speed of the rear wheel 220 as a detection device detecting information on the traveling state of the bicycle 200 is input to the control device 70 of the rear wheel-side hydraulic pressure control device 2. Then, the control device 70 of the rear wheel-side hydraulic pressure control device 2 determines whether the rear wheel 220 is locked or the possibility of the rear wheel 220 being locked based on the detection result of the rear wheel-side vehicle wheel speed sensor 272.

The control device 70 includes an operation determination unit 73 and a control unit 74 as functional units. The operation determination unit 73 is a functional unit determining the opening and closing operation of the control valve 55. Specifically, the operation determination unit 73 determines whether to open or close the inlet valve 56. In addition, the operation determination unit 73 determines whether to open or close the outlet valve 57. The control unit 74 is a functional unit controlling the opening and closing operation of the control valve 55. Specifically, the control unit 74 controls the energization of the first coil 61 to turn the state of the inlet valve 56 into the state determined by the operation determination unit 73. In addition, the control unit 74 controls the energization of the second coil 62 to turn the state of the outlet valve 57 into the state determined by the operation determination unit 73.

In other words, the control device 70 of the front wheel-side hydraulic pressure control device 1 controls the pressure of the brake fluid supplied to the wheel cylinder 253 of the front wheel-side braking portion 251 and controls the braking force of the front wheel 217 by controlling the opening and closing operation of the inlet valve 56 and the outlet valve 57 of the front wheel-side hydraulic pressure control device 1. In other words, the front wheel-side hydraulic pressure control device 1 controls the pressure of the brake fluid supplied to the wheel cylinder 253 of the front wheel-side braking portion 251. In addition, the control device 70 of the rear wheel-side hydraulic pressure control device 2 controls the pressure of the brake fluid supplied to the wheel cylinder 253 of the rear wheel-side braking portion 252 and controls the braking force of the rear wheel 220 by controlling the opening and closing operation of the inlet valve 56 and the outlet valve 57 of the rear wheel-side hydraulic pressure control device 2. In other words, the rear wheel-side hydraulic pressure control device 2 controls the pressure of the brake fluid supplied to the wheel cylinder 253 of the rear wheel-side braking portion 252.

For example, the control device 70 of the front wheel-side hydraulic pressure control device 1 operates as follows. The braking of the front wheel 217 is initiated when the rider grips the brake lever 241 and the piston 51 of the master cylinder 50 of the front wheel-side hydraulic pressure control device 1 is pressed by the brake lever 241. With the front wheel 217 braked, the control device 70 of the front wheel-side hydraulic pressure control device 1 initiates anti-lock brake control when it is determined based on the detection result of the front wheel-side vehicle wheel speed sensor 271 that the front wheel 217 is or may be locked.

With the anti-lock brake control initiated, the control device 70 of the front wheel-side hydraulic pressure control device 1 energizes the first coil 61, closes the inlet valve 56, and shuts off the brake fluid flow from the master cylinder 50 to the wheel cylinder 253 of the front wheel-side braking portion 251. As a result, an increase in the pressure of the brake fluid of the wheel cylinder 253 of the front wheel-side braking portion 251 is suppressed. Meanwhile, the control device 70 of the front wheel-side hydraulic pressure control device 1 energizes the second coil 62, opens the outlet valve 57, and allows the brake fluid to flow from the wheel cylinder 253 of the front wheel-side braking portion 251 to the accumulator 58. As a result, the pressure of the brake fluid of the wheel cylinder 253 of the front wheel-side braking portion 251 decreases. As a result, the lock of the front wheel 217 is released or avoided. When it is determined from the detection result of the pressure sensor 59 that the pressure of the brake fluid of the wheel cylinder 253 of the front wheel-side braking portion 251 has decreased to a predetermined value, the control device 70 of the front wheel-side hydraulic pressure control device 1 closes the outlet valve 57 by de-energizing the second coil 62, opens the inlet valve 56 by de-energizing the first coil 61 for a short time, and increases the pressure of the brake fluid of the wheel cylinder 253 of the front wheel-side braking portion 251. The control device 70 of the front wheel-side hydraulic pressure control device 1 may increase or decrease the pressure of the wheel cylinder 253 of the front wheel-side braking portion 251 only once or may repeat the increase or decrease a plurality of times.

Here, as described above, the pressure sensor 59 detects the pressure of the brake fluid that is in the internal flow path 40 and applies pressure to the wheel cylinder 253. Accordingly, the pressure sensor 59 is capable of directly detecting the brake fluid of the wheel cylinder 253 of the front wheel-side braking portion 251. Accordingly, by the pressure sensor 59 detecting the pressure of the brake fluid applying pressure to the wheel cylinder 253, the front wheel-side hydraulic pressure control device 1 is capable of performing anti-lock brake control on the front wheel 217 with high accuracy.

With the anti-lock brake control completed and the brake lever 241 corresponding to the front wheel-side hydraulic pressure control device 1 returned, the inside of the master cylinder 50 of the front wheel-side hydraulic pressure control device 1 reaches atmospheric pressure and the brake fluid in the wheel cylinder 253 of the front wheel-side braking portion 251 is returned. In addition, the front wheel-side hydraulic pressure control device 1 opens the outlet valve 57 with the anti-lock brake control completed and the brake lever 241 corresponding to the front wheel-side hydraulic pressure control device 1 returned. When the pressure of the brake fluid in the internal flow path 40 becomes lower than the pressure of the brake fluid stored in the accumulator 58 as a result, the brake fluid stored in the accumulator 58 is discharged to the outside of the accumulator 58 pumplessly (that is, without boosting). Then, the brake fluid discharged to the outside the accumulator 58 returns to the master cylinder 50 through the fourth flow path 44, the outlet valve 57, the third flow path 43, the second flow path 42, and the first flow path 41. In addition, the surplus brake fluid that has returned to the master cylinder 50 is stored in the reservoir tank 52.

Likewise, for example, the control device 70 of the rear wheel-side hydraulic pressure control device 2 operates as follows. The braking of the rear wheel 220 is initiated when the rider grips the brake lever 241 and the piston 51 of the master cylinder 50 of the rear wheel-side hydraulic pressure control device 2 is pressed by the brake lever 241. With the rear wheel 220 braked, the control device 70 of the rear wheel-side hydraulic pressure control device 2 initiates anti-lock brake control when it is determined based on the detection result of the rear wheel-side vehicle wheel speed sensor 272 that the rear wheel 220 is or may be locked.

With the anti-lock brake control initiated, the control device 70 of the rear wheel-side hydraulic pressure control device 2 energizes the first coil 61, closes the inlet valve 56, and shuts off the brake fluid flow from the master cylinder 50 to the wheel cylinder 253 of the rear wheel-side braking portion 252. As a result, an increase in the pressure of the brake fluid of the wheel cylinder 253 of the rear wheel-side braking portion 252 is suppressed. Meanwhile, the control device 70 of the rear wheel-side hydraulic pressure control device 2 energizes the second coil 62, opens the outlet valve 57, and allows the brake fluid to flow from the wheel cylinder 253 of the rear wheel-side braking portion 252 to the accumulator 58. As a result, the pressure of the brake fluid of the wheel cylinder 253 of the rear wheel-side braking portion 252 decreases. As a result, the lock of the rear wheel 220 is released or avoided. When it is determined from the detection result of the pressure sensor 59 that the pressure of the brake fluid of the wheel cylinder 253 of the rear wheel-side braking portion 252 has decreased to a predetermined value, the control device 70 of the rear wheel-side hydraulic pressure control device 2 closes the outlet valve 57 by de-energizing the second coil 62, opens the inlet valve 56 by de-energizing the first coil 61 for a short time, and increases the pressure of the brake fluid of the wheel cylinder 253 of the rear wheel-side braking portion 252. The control device 70 of the rear wheel-side hydraulic pressure control device 2 may increase or decrease the pressure of the wheel cylinder 253 of the rear wheel-side braking portion 252 only once or may repeat the increase or decrease a plurality of times.

Here, as described above, the pressure sensor 59 detects the pressure of the brake fluid that is in the internal flow path 40 and applies pressure to the wheel cylinder 253. Accordingly, the pressure sensor 59 is capable of directly detecting the brake fluid of the wheel cylinder 253 of the rear wheel-side braking portion 252. Accordingly, by the pressure sensor 59 detecting the pressure of the brake fluid applying pressure to the wheel cylinder 253, the rear wheel-side hydraulic pressure control device 2 is capable of performing anti-lock brake control on the rear wheel 220 with high accuracy.

With the anti-lock brake control completed and the brake lever 241 corresponding to the rear wheel-side hydraulic pressure control device 2 returned, the inside of the master cylinder 50 of the rear wheel-side hydraulic pressure control device 2 reaches atmospheric pressure and the brake fluid in the wheel cylinder 253 of the rear wheel-side braking portion 252 is returned. In addition, the rear wheel-side hydraulic pressure control device 2 opens the outlet valve 57 with the anti-lock brake control completed and the brake lever 241 corresponding to the rear wheel-side hydraulic pressure control device 2 returned. When the pressure of the brake fluid in the internal flow path 40 becomes lower than the pressure of the brake fluid stored in the accumulator 58 as a result, the brake fluid stored in the accumulator 58 is pumplessly discharged to the outside of the accumulator 58. Then, the brake fluid discharged to the outside the accumulator 58 returns to the master cylinder 50 through the fourth flow path 44, the outlet valve 57, the third flow path 43, the second flow path 42, and the first flow path 41. In addition, the surplus brake fluid that has returned to the master cylinder 50 is stored in the reservoir tank 52.

As described above, the front wheel-side hydraulic pressure control device 1 and the rear wheel-side hydraulic pressure control device 2 have a configuration in which the brake fluid released from the wheel cylinder 253 during the pressure decrease in the anti-lock brake control is stored in the accumulator 58 and the brake fluid in the accumulator 58 is pumplessly discharged to the outside of the accumulator 58. The front wheel-side hydraulic pressure control device 1 and the rear wheel-side hydraulic pressure control device 2 configured as described above can be reduced in size as compared with a hydraulic pressure control device discharging the brake fluid in an accumulator to the outside of the accumulator using a pump, and the degree of freedom of mounting on the bicycle 200 is improved.

Here, in the hydraulic pressure control device of the related art that pumplessly discharges the brake fluid in the accumulator to the outside of the accumulator, the internal flow path returns the brake fluid in the accumulator to the master cylinder without passage through the outlet valve. The internal flow path of the hydraulic pressure control device of the related art includes a bypass flow path, one end of the bypass flow path is connected to the accumulator, and the other end of the bypass flow path is connected to the flow path between the master cylinder and the inlet valve. In addition, the bypass flow path of the internal flow path of the hydraulic pressure control device of the related art is provided with a check valve regulating the flow of the brake fluid from the master cylinder side to the accumulator side in order to prevent the brake fluid from flowing into the accumulator through the bypass flow path. On the other hand, the internal flow path 40 of the front wheel-side hydraulic pressure control device 1 and the rear wheel-side hydraulic pressure control device 2 has a configuration in which the brake fluid in the accumulator 58 cannot be returned to the master cylinder 50 without passage through the outlet valve 57. In other words, the internal flow path 40 of the front wheel-side hydraulic pressure control device 1 and the rear wheel-side hydraulic pressure control device 2 has a configuration in which the brake fluid in the accumulator 58 cannot be returned to the piston mounting hole 21 (one configuration of the master cylinder 50) formed in the base body 10 without passage through the outlet valve 57. The internal flow path 40 of the front wheel-side hydraulic pressure control device 1 and the rear wheel-side hydraulic pressure control device 2 configured as described above does not require the bypass flow path and the check valve of the hydraulic pressure control device of the related art. Accordingly, the front wheel-side hydraulic pressure control device 1 and the rear wheel-side hydraulic pressure control device 2 configured as described above can be further reduced in size and the degree of freedom of mounting on the bicycle 200 is further improved.

It should be noted that at least a part of the control device 70 of the front wheel-side hydraulic pressure control device 1 and the rear wheel-side hydraulic pressure control device 2 is configured as a control board 71 in the present embodiment. Specifically, in the present embodiment, the components of the operation determination unit 73 and the control unit 74 of the control device 70 are configured as the control board 71. In other words, the control board 71 controls the opening and closing operation of the control valve 55. In other words, the control board 71 is electrically connected to the first coil 61 and the second coil 62 and controls the energization of the first coil 61 and the second coil 62.

Here, in the present embodiment, the control device 70 of the front wheel-side hydraulic pressure control device 1 and the rear wheel-side hydraulic pressure control device 2 includes a signal output unit 75 as a functional unit outputting a control signal of the brake lamp 221 based on the detection result of the pressure sensor 59. In other words, in the present embodiment, the control device 70 of the front wheel-side hydraulic pressure control device 1 and the rear wheel-side hydraulic pressure control device 2 is configured to output the control signal of the brake lamp 221 based on the detection result of the pressure sensor 59.

Specifically, when the rider grips the brake lever 241 in order to brake the front wheel 217 and the piston 51 of the master cylinder 50 of the front wheel-side hydraulic pressure control device 1 is pressed by the brake lever 241, the pressure of the brake fluid in the internal flow path 40 of the front wheel-side hydraulic pressure control device 1 rises as compared with a state where the brake lever 241 is not gripped by the rider. In other words, when the rider grips the brake lever 241 and the piston 51 of the master cylinder 50 of the front wheel-side hydraulic pressure control device 1 is pressed by the brake lever 241, the pressure detected by the pressure sensor 59 of the front wheel-side hydraulic pressure control device 1 rises as compared with a state where the brake lever 241 is not gripped by the rider. At that time, the control device 70 of the front wheel-side hydraulic pressure control device 1 outputs the control signal of the brake lamp 221. Then, the bicycle 200 turns on the brake lamp 221 upon receiving the control signal of the brake lamp 221 output from the front wheel-side hydraulic pressure control device 1.

Likewise, when the rider grips the brake lever 241 in order to brake the rear wheel 220 and the piston 51 of the master cylinder 50 of the rear wheel-side hydraulic pressure control device 2 is pressed by the brake lever 241, the pressure of the brake fluid in the internal flow path 40 of the rear wheel-side hydraulic pressure control device 2 rises as compared with a state where the brake lever 241 is not gripped by the rider. In other words, when the rider grips the brake lever 241 and the piston 51 of the master cylinder 50 of the rear wheel-side hydraulic pressure control device 2 is pressed by the brake lever 241, the pressure detected by the pressure sensor 59 of the rear wheel-side hydraulic pressure control device 2 rises as compared with a state where the brake lever 241 is not gripped by the rider. At that time, the control device 70 of the rear wheel-side hydraulic pressure control device 2 outputs the control signal of the brake lamp 221. Then, the bicycle 200 turns on the brake lamp 221 upon receiving the control signal of the brake lamp 221 output from the rear wheel-side hydraulic pressure control device 2.

In a straddle-type vehicle equipped with the hydraulic pressure control device of the related art in which the piston of the master cylinder is pressed by the brake lever gripped by a rider, a mechanical brake switch for brake lever posture detection is provided and the brake lamp is turned on based on the detection result of the brake switch. Specifically, the brake switch is provided near the brake lever, that is, near the handlebar. The brake switch is configured to be pressed by the brake lever with a rider gripping the brake lever with his or her hand. In addition, the brake switch is configured to output a signal when pressed or not pressed. In the straddle-type vehicle equipped with the hydraulic pressure control device of the related art, the brake lamp is turned on after whether or not the brake is applied is determined based on the presence or absence of signal output from the brake switch.

As described above, in the straddle-type vehicle equipped with the hydraulic pressure control device of the related art described above, a dedicated brake switch needs to be disposed near the handlebar so that whether or not the brake is applied is detected. In addition, in the straddle-type vehicle equipped with the hydraulic pressure control device of the related art described above, a signal line connected to the brake switch needs to be routed near the handlebar. Accordingly, an increase in complexity arises around the handlebar when the straddle-type vehicle is equipped with the hydraulic pressure control device of the related art described above, that is, the brake system provided with the hydraulic pressure control device.

On the other hand, the control device 70 of the front wheel-side hydraulic pressure control device 1 and the rear wheel-side hydraulic pressure control device 2 according to the present embodiment outputs the control signal of the brake lamp 221 of the bicycle 200 based on the detection result of the pressure sensor 59 used in controlling the pressure of the brake fluid supplied to the wheel cylinder 253. Accordingly, when the bicycle 200 is equipped with the brake system 100 including the front wheel-side hydraulic pressure control device 1 and the rear wheel-side hydraulic pressure control device 2, a dedicated brake switch detecting whether or not the brake is applied is unnecessary. Accordingly, a signal line connected to the brake switch is also unnecessary when the bicycle 200 is equipped with the brake system 100 including the front wheel-side hydraulic pressure control device 1 and the rear wheel-side hydraulic pressure control device 2. Accordingly, the front wheel-side hydraulic pressure control device 1 and the rear wheel-side hydraulic pressure control device 2 according to the present embodiment are capable of suppressing an increase in complexity around the handlebar 233 as compared with the related art when the bicycle 200 is equipped with the brake system 100.

In addition, the mechanical brake switch is fragile. In addition, in a case where the signal line connected to the brake switch is routed near the handlebar, the rider's hand or the like is likely to be caught in the signal line. In view of this point, the front wheel-side hydraulic pressure control device 1 and the rear wheel-side hydraulic pressure control device 2 according to the present embodiment do not require a brake switch and a signal line connected to the brake switch, and thus the reliability of the bicycle 200 is also improved.

In addition, the front wheel-side hydraulic pressure control device 1 and the rear wheel-side hydraulic pressure control device 2 according to the present embodiment are easily mounted to the bicycle 200 and the degree of freedom of mounting on the bicycle 200 is improved since an increase in complexity around the handlebar 233 can be suppressed as compared with the related art. In addition, the base body 10 of the front wheel-side hydraulic pressure control device 1 and the rear wheel-side hydraulic pressure control device 2 according to the present embodiment is integrated with the master cylinder. In a case where the master cylinder 50 and the base body 10 are separate bodies, piping such as a liquid pipe connecting the master cylinder 50 and the base body 10 needs to be routed near the handlebar 233. On the other hand, in a case where the base body 10 is a master cylinder-integrated base body, piping such as the liquid pipe does not have to be routed near the handlebar 233. Accordingly, with the front wheel-side hydraulic pressure control device 1 and the rear wheel-side hydraulic pressure control device 2 according to the present embodiment, the degree of freedom of mounting on the bicycle 200 is further improved and the reliability of the bicycle 200 is also further improved as compared with a case where the master cylinder 50 and the base body 10 are separate bodies.

In addition, in the present embodiment, the control device 70 of the front wheel-side hydraulic pressure control device 1 and the rear wheel-side hydraulic pressure control device 2 outputs the control signal of the brake lamp 221 in the event of a decrease in the pressure of the brake fluid in the internal flow path 40 attributable to a change in the opening and closing state of the control valve 55. In other words, the control device 70 of the front wheel-side hydraulic pressure control device 1 and the rear wheel-side hydraulic pressure control device 2 outputs the control signal of the brake lamp 221 when the pressure of the brake fluid of the wheel cylinder 253 has decreased as a result of anti-lock brake control. The control signal of the brake lamp 221 at the time when the pressure of the brake fluid of the wheel cylinder 253 has decreased as a result of the anti-lock brake control is a signal that can be distinguished from the control signal of the brake lamp 221 in a case where no anti-lock brake control is performed. As a result, how the brake lamp 221 of the bicycle 200 emits light can be changed depending on, for example, whether or not anti-lock brake control is performed during braking. For example, during braking, the bicycle 200 turns on the brake lamp 221 when no anti-lock brake control is performed and causes the brake lamp 221 to blink when anti-lock brake control is performed. By changing how the brake lamp 221 emits light depending on whether or not anti-lock brake control is performed during the braking of the bicycle 200 as described above, a vehicle traveling behind the bicycle 200 or the like is capable of knowing that the braking force of the bicycle 200 has changed. Accordingly, the safety of the bicycle 200 is improved by the control signal of the brake lamp 221 being output in the event of a decrease in the pressure of the brake fluid in the internal flow path 40 attributable to a change in the opening and closing state of the control valve 55. It should be noted that the control signal of the brake lamp 221 output from the control device 70 of the front wheel-side hydraulic pressure control device 1 and the rear wheel-side hydraulic pressure control device 2 may be used for control other than the light emission from the brake lamp 221.

In addition, as illustrated in Fig. 2, the brake lever 241 in the brake system 100 according to the present embodiment is in contact with the piston 51 of the master cylinder 50 in a state where the rider does not grip the brake lever 241 with his or her hand. Accordingly, when the rider begins to grip the brake lever 241, the piston 51 of the master cylinder 50 immediately begins to be pressed by the brake lever 241. In other words, when the rider begins to grip the brake lever 241, the pressure of the brake fluid in the internal flow path 40 immediately begins to rise. Accordingly, in the brake system 100 configured in this manner, the delay between the initiation of the braking of the bicycle 200 by the rider and the light emission from the brake lamp 221 can be suppressed and the safety of the bicycle 200 is improved.

### <Configuration of Hydraulic Pressure Control Device>

The configuration of the hydraulic pressure control device of the brake system according to the embodiment will be described.

It should be noted that the brake system 100 according to the present embodiment includes two hydraulic pressure control devices (the front wheel-side hydraulic pressure control device 1 and the rear wheel-side hydraulic pressure control device 2). When the front wheel-side hydraulic pressure control device 1 and the rear wheel-side hydraulic pressure control device 2 are mounted to the handlebar 233 of the bicycle 200, the front wheel-side hydraulic pressure control device 1 and the rear wheel-side hydraulic pressure control device 2 have a shape that is inverted in the left-right direction. Accordingly, the front wheel-side hydraulic pressure control device 1 will be described below. In other words, the rear wheel-side hydraulic pressure control device 2 is the front wheel-side hydraulic pressure control device 1 that is inverted in the left-right direction. By the front wheel-side hydraulic pressure control device 1 and the rear wheel-side hydraulic pressure control device 2 having the shape inverted in the left-right direction, the design of the front wheel-side hydraulic pressure control device 1 and the rear wheel-side hydraulic pressure control device 2 is facilitated.

In addition, the configuration of the front wheel-side hydraulic pressure control device 1 will be described below while observing the front wheel-side hydraulic pressure control device 1 in a state where the front wheel-side hydraulic pressure control device 1 is mounted to the handlebar 233 of the bicycle 200 and the bicycle 200 travels straight.

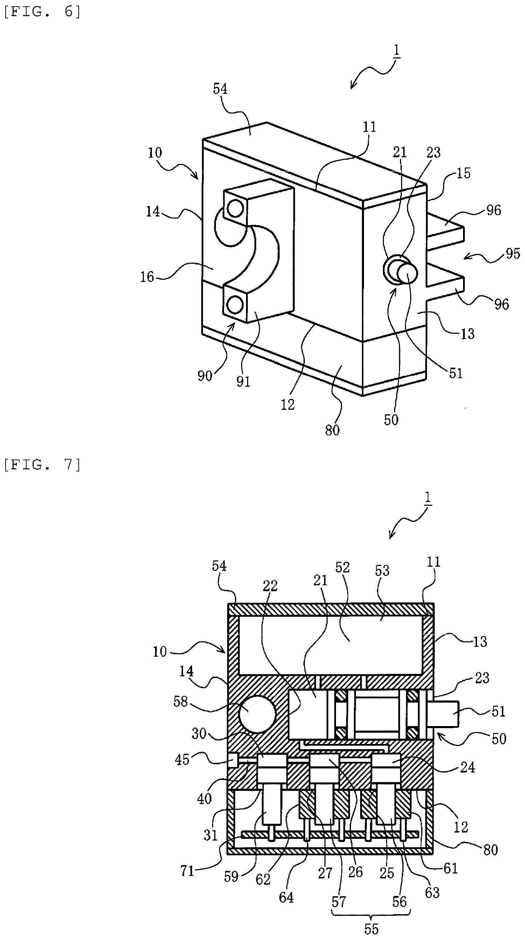

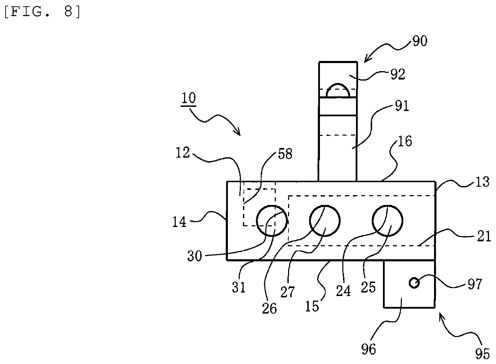

Fig. 6 is a perspective view illustrating the front wheel-side hydraulic pressure control device according to the embodiment of the present invention. Fig. 6 is a perspective view in which the front wheel-side hydraulic pressure control device 1 is observed from the rear right side of the front wheel-side hydraulic pressure control device 1. Fig. 7 is a vertical cross-sectional view of the front wheel-side hydraulic pressure control device according to the embodiment of the present invention. Fig. 8 is a bottom view illustrating the base body of the front wheel-side hydraulic pressure control device according to the embodiment of the present invention.

The front wheel-side hydraulic pressure control device 1 will be described below with reference to Figs. 6 to 8 and the above drawings.

The base body 10 of the front wheel-side hydraulic pressure control device 1 is, for example, a substantially rectangular parallelepiped member made of an aluminum alloy. It should be noted that each surface of the base body 10 may be flat, may include a curved portion, or may include a step. The reservoir tank 52, an inlet valve mounting hole 24, an outlet valve mounting hole 26, the wheel cylinder port 45, and the piston mounting hole 21 of the master cylinder 50 are formed in the base body 10.

The reservoir tank 52 is formed in the base body 10 so as to be open on a first surface 11. In other words, an opening portion 53 of the reservoir tank 52 is formed on the first surface 11. The front wheel-side hydraulic pressure control device 1 is mounted to the bicycle 200 such that the opening portion 53 of the reservoir tank 52 is the upper portion of the reservoir tank 52 so that the inside of the reservoir tank 52 is maintained at atmospheric pressure. Accordingly, the first surface 11 is the upper surface of the base body 10. It should be noted that the opening portion 53 of the reservoir tank 52 is covered with a lid 54.

The inlet valve mounting hole 24 is a hole where the inlet valve 56 is provided so as to be capable of reciprocating. The inlet valve mounting hole 24 is formed in the base body 10 so as to be open on a second surface 12, which is opposite to the first surface 11. In other words, an opening portion 25 of the inlet valve mounting hole 24 is formed in the second surface 12. The second surface 12 is the lower surface of the base body 10. The inlet valve mounting hole 24 is formed in the base body 10 along, for example, the vertical direction. The first flow path 41 and the second flow path 42 of the internal flow path 40 illustrated in Fig. 3 communicate with the inlet valve mounting hole 24. The flow of the brake fluid between the first flow path 41 and the second flow path 42 is opened and closed by the inlet valve 56 reciprocating in the inlet valve mounting hole 24.

The outlet valve mounting hole 26 is a hole where the outlet valve 57 is provided so as to be capable of reciprocating. The outlet valve mounting hole 26 is formed in the base body 10 so as to be open on the second surface 12. In other words, an opening portion 27 of the outlet valve mounting hole 26 is formed in the second surface 12. The outlet valve mounting hole 26 is formed in the base body 10 along, for example, the vertical direction. The third flow path 43 and the fourth flow path 44 of the internal flow path 40 illustrated in Fig. 3 communicate with the outlet valve mounting hole 26. The flow of the brake fluid between the third flow path 43 and the fourth flow path 44 is opened and closed by the outlet valve 57 reciprocating in the outlet valve mounting hole 26.

As described above, the piston 51 of the master cylinder 50 is provided in the piston mounting hole 21 of the master cylinder 50 so as to be capable of reciprocating. The piston mounting hole 21 is formed in the base body 10 so as to be open on a third surface 13 connecting the first surface 11 and the second surface 12. In other words, an opening portion 23 of the piston mounting hole 21 is formed in the third surface 13. The third surface 13 is a side surface of the base body 10. More specifically, in the case of the front wheel-side hydraulic pressure control device 1 provided around the grip portion 234 on the right side of the handlebar 233, the third surface 13 is the right side surface of the base body 10. In addition, in the case of the rear wheel-side hydraulic pressure control device 2 provided around the grip portion 234 on the left side of the handlebar 233, the third surface 13 is the left side surface of the base body 10.

The master cylinder 50 extends along the range of the handlebar 233 facing the master cylinder 50 in a plan view. In other words, in a plan view, the master cylinder 50 is formed on the base body 10 so as to extend substantially in the left-right direction. The wheel cylinder port 45 is formed in the base body 10 so as to be open on a fourth surface 14, which is opposite to the third surface 13.

In a state where the inlet valve 56 is provided in the inlet valve mounting hole 24, a part of the inlet valve 56 protrudes from the opening portion 25 of the inlet valve mounting hole 24 to the outside of the inlet valve mounting hole 24. In other words, in a state where the inlet valve 56 is provided in the inlet valve mounting hole 24, a part of the inlet valve 56 protrudes downward from the second surface 12 of the base body 10. The first coil 61, which is the drive source for the inlet valve 56, is provided so as to surround the part of the inlet valve 56 that protrudes downward beyond the base body 10. In addition, the first coil 61 is electrically connected to the control board 71 via a terminal 63.

In a state where the outlet valve 57 is provided in the outlet valve mounting hole 26, a part of the outlet valve 57 protrudes from the opening portion 27 of the outlet valve mounting hole 26 to the outside of the outlet valve mounting hole 26. In other words, in a state where the outlet valve 57 is provided in the outlet valve mounting hole 26, a part of the outlet valve 57 protrudes downward from the second surface 12 of the base body 10. The second coil 62, which is the drive source for the outlet valve 57, is provided so as to surround the part of the outlet valve 57 that protrudes downward beyond the base body 10. In addition, the second coil 62 is electrically connected to the control board 71 via a terminal 64.

The first coil 61, the second coil 62, and the control board 71 are stored in a housing 80 included in the front wheel-side hydraulic pressure control device 1. The housing 80 is connected to the base body 10. The housing 80 storing the first coil 61, the second coil 62, and the control board 71 disposed below the base body 10 is also disposed below the base body 10.

In the hydraulic pressure control device of the related art provided with the master cylinder-integrated base body, the inlet valve mounting hole and the outlet valve mounting hole are formed in the base body so as to extend in a substantially horizontal direction with the hydraulic pressure control device mounted to the handlebar. In other words, in the hydraulic pressure control device of the related art provided with the master cylinder-integrated base body, the inlet valve mounting hole and the outlet valve mounting hole are open to the front, rear, or side of the straddle-type vehicle when the hydraulic pressure control device is mounted to the handlebar. Here, the housing storing the coil as the inlet valve drive source, the coil as the outlet valve drive source, and the control board controlling the energization of the coils is disposed so as to face the surface of the base body where the inlet valve mounting hole and the outlet valve mounting hole are open. In other words, as for the hydraulic pressure control device of the related art provided with the master cylinder-integrated base body, it is imperative to ensure a housing disposition space in front of, behind, or beside the hydraulic pressure control device in mounting the hydraulic pressure control device on the handlebar. However, the straddle-type vehicle is provided with the handlebar behind the mounting position of the hydraulic pressure control device. In addition, as for the straddle-type vehicle, various objects are also provided in front of and beside the mounting position of the hydraulic pressure control device. Accordingly, the hydraulic pressure control device of the related art provided with the master cylinder-integrated base body has a low degree of freedom of mounting on a straddle-type vehicle.

On the other hand, in the base body 10 of the front wheel-side hydraulic pressure control device 1 according to the present embodiment, the inlet valve mounting hole 24 and the outlet valve mounting hole 26 are formed on the second surface 12, which is the lower surface when the front wheel-side hydraulic pressure control device 1 is mounted to the handlebar 233 of the bicycle 200. Accordingly, when the front wheel-side hydraulic pressure control device 1 according to the present embodiment is mounted to the handlebar 233 of the bicycle 200, the first coil 61, the second coil 62, the control board 71, and the housing 80 are disposed below the base body 10. Here, in the straddle-type vehicle, there is a spatial margin in the vertical direction around the mounting position of the hydraulic pressure control device as compared with the front, rear, and side. Accordingly, the degree of freedom of mounting on the bicycle 200 is improved as compared with the related art with the front wheel-side hydraulic pressure control device 1 according to the present embodiment, that is, the rear wheel-side hydraulic pressure control device 2 according to the present embodiment.

Here, as is apparent from Fig. 8, the direction of arrangement of the opening portion 25 of the inlet valve mounting hole 24 and the opening portion 27 of the outlet valve mounting hole 26 on the second surface 12 is along the direction of extension of the piston mounting hole 21 (direction in which the piston mounting hole 21 extends). Specifically, when the front wheel-side hydraulic pressure control device 1 mounted to the handlebar 233 of the bicycle 200 is observed from above or below, the direction of arrangement of the opening portion 25 of the inlet valve mounting hole 24 and the opening portion 27 of the outlet valve mounting hole 26 on the second surface 12 is along the direction of extension of the piston mounting hole 21 (direction in which the piston mounting hole 21 extends). It should be noted that "along" expressed in the present embodiment does not mean that two compared directions are exactly parallel. The two compared directions may be slightly tilted. For example, the inclination of the two directions may be less than 45°.

In general, a hydraulic pressure control device provided with a master cylinder-integrated base body becomes large in the direction of extension of a piston mounting hole. In addition, in a straddle-type vehicle, there is a spatial margin around the mounting position of the hydraulic pressure control device in the left-right direction as compared with the front-rear direction. In other words, around the mounting position of the hydraulic pressure control device on the straddle-type vehicle, the spatial margin in the front-rear direction is the least of those in the front-rear, left-right, and vertical directions. Accordingly, in general, a hydraulic pressure control device provided with a master cylinder-integrated base body is mounted to the handlebar of a straddle-type vehicle such that the direction of extension of a piston mounting hole is along the left-right direction of the straddle-type vehicle in a plan view. In other words, in general, a hydraulic pressure control device provided with a master cylinder-integrated base body is mounted to the handlebar of a straddle-type vehicle such that the direction of extension of a piston mounting hole is along the handlebar in a plan view. As illustrated in Fig. 2, the same applies to the front wheel-side hydraulic pressure control device 1 according to the present embodiment. At this time, the front wheel-side hydraulic pressure control device 1 having a configuration in which the direction of arrangement of the opening portion 25 of the inlet valve mounting hole 24 and the opening portion 27 of the outlet valve mounting hole 26 on the second surface 12 is along the direction of extension of the piston mounting hole 21 is capable of suppressing the width in the front-rear direction, in which the spatial margin is the least at the mounting position of the front wheel-side hydraulic pressure control device 1 of the bicycle 200. Accordingly, the degree of freedom of mounting on the bicycle 200 is further improved with the front wheel-side hydraulic pressure control device 1 having the configuration, that is, the rear wheel-side hydraulic pressure control device 2 having the configuration.

As described above, in the present embodiment, the front wheel-side hydraulic pressure control device 1 includes the pressure sensor 59. The pressure sensor 59 is provided in a pressure sensor mounting hole 30 formed in the base body 10. The pressure sensor mounting hole 30 is formed in the base body 10 so as to be open on the second surface 12. In other words, an opening portion 31 of the pressure sensor mounting hole 30 is formed in the second surface 12. The pressure sensor mounting hole 30 is formed in the base body 10 along, for example, the vertical direction. The pressure sensor 59 and the control board 71 can be connected in the front-rear direction by the opening portion 31 of the pressure sensor mounting hole 30 being formed in the second surface 12. Accordingly, by the opening portion 31 of the pressure sensor mounting hole 30 being formed in the second surface 12, the front wheel-side hydraulic pressure control device 1 becoming large in the front-rear direction and the left-right direction can be suppressed even in a case where the pressure sensor 59 is provided in the base body 10. Accordingly, as for the front wheel-side hydraulic pressure control device 1 in which the opening portion 31 of the pressure sensor mounting hole 30 is formed in the second surface 12, that is, the rear wheel-side hydraulic pressure control device 2 in which the opening portion 31 of the pressure sensor mounting hole 30 is formed in the second surface 12, the degree of freedom of mounting on the bicycle 200 is improved as compared with the related art even in a case where the pressure sensor 59 is provided in the base body 10.

In addition, as is apparent from Fig. 8, the direction of arrangement of the opening portion 25 of the inlet valve mounting hole 24, the opening portion 27 of the outlet valve mounting hole 26, and the opening portion 31 of the pressure sensor mounting hole 30 on the second surface 12 is along the direction of extension of the piston mounting hole 21 (direction in which the piston mounting hole 21 extends). Specifically, when the front wheel-side hydraulic pressure control device 1 mounted to the handlebar 233 of the bicycle 200 is observed from above or below, the direction of arrangement of the opening portion 25 of the inlet valve mounting hole 24, the opening portion 27 of the outlet valve mounting hole 26, and the opening portion 31 of the pressure sensor mounting hole 30 on the second surface 12 is along the direction of extension of the piston mounting hole 21 (direction in which the piston mounting hole 21 extends). The front wheel-side hydraulic pressure control device 1 configured as described above is capable of suppressing the width in the front-rear direction, in which the spatial margin is the least at the mounting position of the front wheel-side hydraulic pressure control device 1 of the bicycle 200, when the base body 10 is provided with the pressure sensor 59. Accordingly, with the front wheel-side hydraulic pressure control device 1 configured as described above, that is, the rear wheel-side hydraulic pressure control device 2 configured as described above, the degree of freedom of mounting on the bicycle 200 is further improved when the base body 10 is provided with the pressure sensor 59. It should be noted that the opening portion 25 of the inlet valve mounting hole 24, the opening portion 27 of the outlet valve mounting hole 26, and the opening portion 31 of the pressure sensor mounting hole 30 on the second surface 12 do not necessarily have to be arranged in a straight line and may be arranged in a zigzag pattern.

In addition, in the present embodiment, the pressure sensor mounting hole 30, the outlet valve mounting hole 26, and the inlet valve mounting hole 24 are arranged in order of being away from the wheel cylinder port 45. As described above, in the present embodiment, the pressure sensor 59 detects the pressure of the brake fluid applying pressure to the wheel cylinder 253. In such a case, the inlet valve mounting hole 24, the outlet valve mounting hole 26, the pressure sensor mounting hole 30, and the wheel cylinder port 45 are arranged along the direction of flow of the brake fluid flowing through the internal flow path 40 from the piston mounting hole 21 of the master cylinder 50 toward the wheel cylinder port 45. Accordingly, as for the front wheel-side hydraulic pressure control device 1 configured as described above, that is, the rear wheel-side hydraulic pressure control device 2 configured as described above, the internal flow path 40 from the inlet valve mounting hole 24 to the wheel cylinder port 45 can be given a simple shape and the manufacturing cost can be suppressed.

In addition, in the present embodiment, at least a part of a holding portion 95 of the brake lever 241 that the rider grips with his or her hand is integrally formed on the base body 10. Although the configuration of the holding portion 95 is not particularly limited, the holding portion 95 in the present embodiment includes a pair of holding plates 96. Holes 97 rotatably supporting a shaft portion 242 (see Fig. 2) of the brake lever 241 are formed in the holding plates 96. With the shaft portion 242 of the brake lever 241 inserted in the hole 97, the pair of holding plates 96 movably sandwich the brake lever 241. As a result, the brake lever 241 is swingably held by the holding portion 95. In addition, one of the pair of holding plates 96 is formed integrally with the base body 10 on, for example, a fifth surface 15, which is the front surface of the base body 10. It should be noted that the other of the pair of holding plates 96 is fixed to the base body 10 by, for example, screwing. By at least a part of the holding portion 95 being integrally formed on the base body 10, the number of components and assembly man-hours of the brake system 100 and so on can be reduced and the manufacturing cost of the brake system 100 can be suppressed as compared with a case where the holding portion 95 is formed separately from the base body 10.

In addition, in the present embodiment, at least a part of a mounting portion 90 for mounting the base body 10 on the handlebar 233 is integrally formed on the base body 10. Although the configuration of the mounting portion 90 is not particularly limited, the mounting portion 90 in the present embodiment includes a base portion 91 integrally formed on the base body 10 and a sandwiching portion 92 fixed to the base portion 91 by screwing or the like. The base portion 91 is formed integrally with the base body 10 on, for example, a sixth surface 16, which is the back surface of the base body 10. The base body 10 is fixed to the handlebar 233 by the handlebar 233 being sandwiched between the base portion 91 and the sandwiching portion 92 and the sandwiching portion 92 being fixed to the base portion 91. By at least a part of the mounting portion 90 being integrally formed on the base body 10, the number of components and assembly man-hours of the bicycle 200 equipped with the brake system 100 and so on can be reduced and the manufacturing cost of the bicycle 200 can be suppressed as compared with a case where the mounting portion 90 is formed separately from the base body 10.

In addition, in the present embodiment, the accumulator 58 is formed in the base body 10 of the front wheel-side hydraulic pressure control device 1. At this time, the accumulator 58 is disposed on the side opposite to the opening portion 23 of the piston mounting hole 21 with reference to a bottom portion 22 of the piston mounting hole 21. In other words, the piston mounting hole 21 of the master cylinder 50 and the accumulator 58 are arranged in the left-right direction in a plan view. The front wheel-side hydraulic pressure control device 1 in which the accumulator 58 is formed in this manner is capable of suppressing the width in the front-rear direction, in which the spatial margin is the least at the mounting position of the front wheel-side hydraulic pressure control device 1 of the bicycle 200. Accordingly, with the front wheel-side hydraulic pressure control device 1 in which the accumulator 58 is formed in this manner, that is, the rear wheel-side hydraulic pressure control device 2 in which the accumulator 58 is formed in this manner, the degree of freedom of mounting on the bicycle 200 is improved when the accumulator 58 is formed in the base body 10. It should be noted that the accumulator 58 in the present embodiment is obtained by the opening portion of a hole open in the sixth surface 16 being blocked. However, this configuration of the accumulator 58 is merely an example. For example, the accumulator 58 may be formed by the opening portion of a hole open in the fourth surface 14 being blocked. In another example, the accumulator 58 may be formed by the opening portion of a hole open in the fifth surface 15 being blocked.

### <Effect of Hydraulic Pressure Control Device>

The effect of the hydraulic pressure control device according to the embodiment will be described.

The hydraulic pressure control device (front wheel-side hydraulic pressure control device 1 and rear wheel-side hydraulic pressure control device 2) according to the present embodiment is used in the brake system 100 capable of executing anti-lock brake control and is mounted to the handlebar 233 of the bicycle 200. In addition, the hydraulic pressure control device according to the present embodiment has a configuration in which the accumulator 58 stores the brake fluid released from the wheel cylinder 253 during the pressure decrease in the anti-lock brake control and the brake fluid in the accumulator 58 is pumplessly discharged to the outside of the accumulator 58. The hydraulic pressure control device according to the present embodiment includes the base body 10, the inlet valve 56, and the outlet valve 57. The base body 10 has the piston mounting hole 21 where the piston 51 of the master cylinder 50 is provided so as to be capable of reciprocating, the reservoir tank 52 connected to the piston mounting hole 21 and storing the brake fluid, and the internal flow path 40 as a part of the brake fluid flow path that allows the piston mounting hole 21 and the wheel cylinder 253 to communicate with each other. The inlet valve 56 is provided in the inlet valve mounting hole 24 formed in the base body 10 so as to be capable of reciprocating and opens and closes the part of the internal flow path 40 through which the brake fluid flowing from the piston mounting hole 21 to the wheel cylinder 253 passes. The outlet valve 57 is provided in the outlet valve mounting hole 26 formed in the base body 10 so as to be capable of reciprocating and opens and closes the part of the internal flow path 40 through which the brake fluid flowing from the wheel cylinder 253 to the accumulator 58 passes. In a case where the surface of the base body 10 where the opening portion 53 of the reservoir tank 52 is formed is the first surface 11 and the surface of the base body 10 opposite to the first surface 11 is the second surface 12, the inlet valve mounting hole 24 and the outlet valve mounting hole 26 are open on the second surface 12.

The first coil 61, the second coil 62, the control board 71, and the housing 80 are disposed below the base body 10 when the hydraulic pressure control device according to the present embodiment configured as described above is mounted to the handlebar 233 of the bicycle 200 as described above. Accordingly, the degree of freedom of mounting on the bicycle 200 is improved as compared with the related art with the hydraulic pressure control device according to the present embodiment configured as described above.

### <Modification Example>

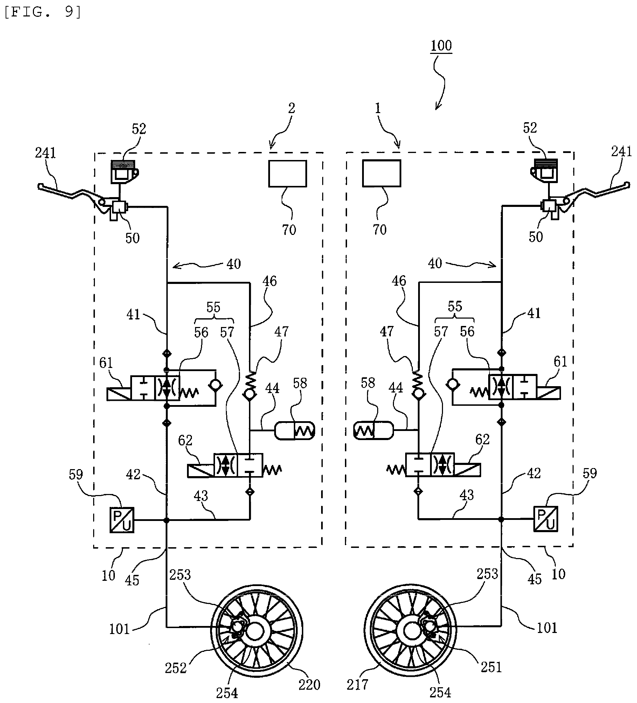

Fig. 9 is a diagram illustrating a schematic configuration of a modification example of the brake system according to the embodiment of the present invention.

As described above, the front wheel-side hydraulic pressure control device 1 and the rear wheel-side hydraulic pressure control device 2 have the configuration in which the accumulator 58 stores the brake fluid released from the wheel cylinder 253 during the pressure decrease in the anti-lock brake control and the brake fluid in the accumulator 58 is pumplessly discharged to the outside of the accumulator 58. The internal flow path 40 of the front wheel-side hydraulic pressure control device 1 and the rear wheel-side hydraulic pressure control device 2 realizing such a configuration is not limited to the configuration described above. For example, the internal flow path 40 of the front wheel-side hydraulic pressure control device 1 and the rear wheel-side hydraulic pressure control device 2 may be configured as illustrated in Fig. 9.

Specifically, the internal flow path 40 of the front wheel-side hydraulic pressure control device 1 and the rear wheel-side hydraulic pressure control device 2 illustrated in Fig. 9 includes a bypass flow path 46 and a check valve 47 in addition to the configuration of the internal flow path 40 illustrated in Fig. 2. One end of the bypass flow path 46 is connected to the accumulator 58, and the other end of the bypass flow path 46 is connected to the first flow path 41. The check valve 47 is provided on the bypass flow path 46 and regulates the brake fluid flow from the master cylinder 50 side to the accumulator 58 side. Also in the front wheel-side hydraulic pressure control device 1 and the rear wheel-side hydraulic pressure control device 2 in which the internal flow path 40 is configured as described above, the accumulator 58 is capable of storing the brake fluid released from the wheel cylinder 253 during the pressure decrease in the anti-lock brake control and the brake fluid in the accumulator 58 can be pumplessly discharged to the outside of the accumulator 58 via the bypass flow path 46.

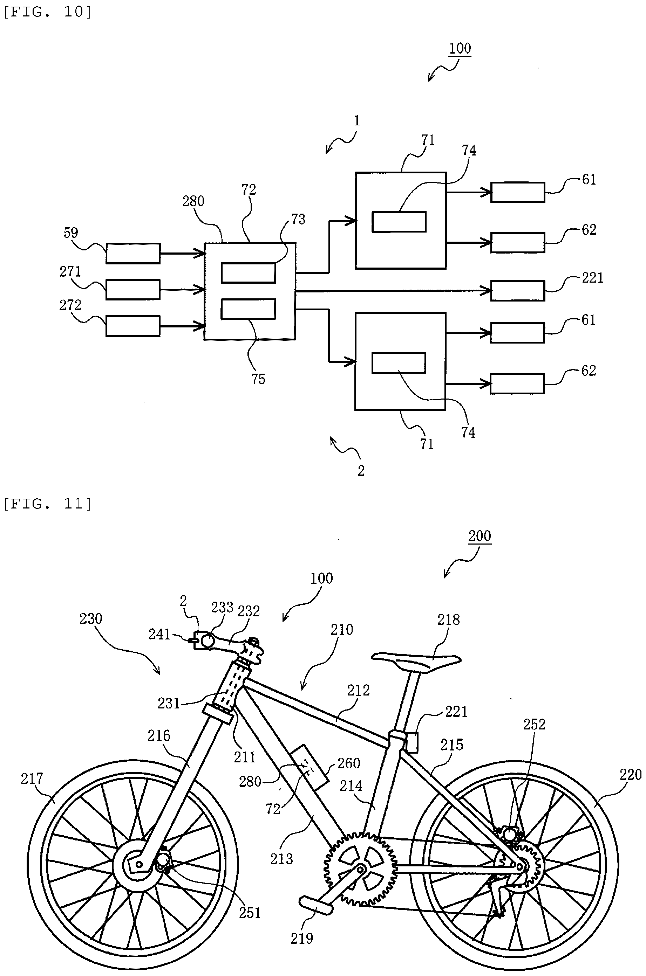

Fig. 10 is a block diagram illustrating the modification example of the brake system according to the embodiment of the present invention. In addition, Fig. 11 is a side view illustrating a schematic configuration of a bicycle equipped with the modification example of the brake system according to the embodiment of the present invention.

In the front wheel-side hydraulic pressure control device 1 of the brake system 100 illustrated in Fig. 10, the component of the operation determination unit 73 is configured as an operation determination control board 72 different from the control board 71. Accordingly, in the front wheel-side hydraulic pressure control device 1 of the brake system 100 illustrated in Fig. 10, the component of the control unit 74 is configured as the control board 71. Likewise, in the rear wheel-side hydraulic pressure control device 2 of the brake system 100 illustrated in Fig. 10, the component of the operation determination unit 73 is configured as the operation determination control board 72 different from the control board 71. Accordingly, in the rear wheel-side hydraulic pressure control device 2 of the brake system 100 illustrated in Fig. 10, the component of the control unit 74 is configured as the control board 71. The operation determination control board 72 of the front wheel-side hydraulic pressure control device 1 and the operation determination control board 72 of the rear wheel-side hydraulic pressure control device 2 are configurations used together. In addition, the operation determination control board 72 is stored at a part different from the housing 80 of the front wheel-side hydraulic pressure control device 1 and the housing 80 of the rear wheel-side hydraulic pressure control device 2. It should be noted that the signal output unit 75 of the front wheel-side hydraulic pressure control device 1 and the rear wheel-side hydraulic pressure control device 2 is also configured as the operation determination control board 72.

In other words, the operation determination control board 72 determines the opening and closing operation of the control valve 55 of the front wheel-side hydraulic pressure control device 1 and determines the opening and closing operation of the control valve 55 of the rear wheel-side hydraulic pressure control device 2 based on information on the traveling state of the bicycle 200. In addition, the control board 71 of the front wheel-side hydraulic pressure control device 1 controls the opening and closing operation of the control valve 55 of the front wheel-side hydraulic pressure control device 1 based on the determination by the operation determination control board 72. In other words, the control board 71 of the front wheel-side hydraulic pressure control device 1 controls the energization of the first coil 61 and the second coil 62 of the front wheel-side hydraulic pressure control device 1 based on the determination by the operation determination control board 72. In addition, the control board 71 of the rear wheel-side hydraulic pressure control device 2 controls the opening and closing operation of the control valve 55 of the rear wheel-side hydraulic pressure control device 2 based on the determination by the operation determination control board 72. In other words, the control board 71 of the rear wheel-side hydraulic pressure control device 2 controls the energization of the first coil 61 and the second coil 62 of the rear wheel-side hydraulic pressure control device 2 based on the determination by the operation determination control board 72.

In the brake system 100 configured as described above, the operation determination control board 72 can be stored in a housing different from the housing 80 of the front wheel-side hydraulic pressure control device 1 and the housing 80 of the rear wheel-side hydraulic pressure control device 2. In other words, the front wheel-side hydraulic pressure control device 1 and the rear wheel-side hydraulic pressure control device 2 can be further reduced in size with the brake system 100 configured as described above and the degree of freedom of mounting of the front wheel-side hydraulic pressure control device 1 and the rear wheel-side hydraulic pressure control device 2 on the bicycle 200 is further improved. In addition, with the brake system 100 configured as described above, the number of signal lines connected to the front wheel-side hydraulic pressure control device 1 and the rear wheel-side hydraulic pressure control device 2 can be reduced and an increase in complexity around the handlebar 233 can be further suppressed.

Here, as illustrated in Fig. 11, the operation determination control board 72 is preferably mounted to the bicycle 200 at a position behind the handlebar 233. As a result, a stone or the like hitting the housing for storing the operation determination control board 72 during the traveling of the bicycle 200 can be suppressed and the reliability of the brake system 100 is improved.

In addition, in a case where the bicycle 200 is equipped with an other device control board 280 as a control board of a device other than the brake system 100 as illustrated in Fig. 10, the operation determination control board 72 is preferably formed integrally with the other device control board 280. Here, the bicycle 200 illustrated in Fig. 11 includes a control board monitoring the charge amount of the power source unit 260. Accordingly, in the bicycle 200 illustrated in Fig. 11, the control board monitoring the charge amount of the power source unit 260 is used as the other device control board 280. It should be noted that the other device control board 280 is not particularly limited insofar as it is a control board of a device other than the brake system 100. For example, some straddle-type vehicles provided with an engine as a drive source are provided with an engine control unit. For example, the control board of the engine control unit may be used as the other device control board 280.

By the brake system 100 being configured as described above, the manufacturing cost of the brake system 100 can be reduced as compared with a case where the operation determination control board 72 is manufactured as a dedicated control board. In addition, in a case where a detection device (such as the pressure sensor 59) detecting the information that the operation determination control board 72 uses in determining the opening and closing operation of the control valve 55 and the other device control board 280 are connected by a signal line, the number of signal lines routed to the bicycle 200 can be reduced and the manufacturing man-hours and manufacturing cost of the bicycle 200 can be reduced as compared with a case where the operation determination control board 72 is manufactured as a dedicated control board.

Although the embodiment has been described above, the present invention is not limited to the description of the embodiment. For example, the description of the embodiment may be implemented in part in the present invention.

### Reference Signs List

- 1:: Front wheel-side hydraulic pressure control device
- 2:: Rear wheel-side hydraulic pressure control device
- 10:: Base body
- 11:: First surface
- 12:: Second surface
- 13:: Third surface
- 14:: Fourth surface
- 15:: Fifth surface
- 16:: Sixth surface
- 21:: Piston mounting hole
- 22:: Bottom portion
- 23:: Opening portion
- 24:: Inlet valve mounting hole
- 25:: Opening portion
- 26:: Outlet valve mounting hole
- 27:: Opening portion
- 30:: Pressure sensor mounting hole
- 31:: Opening portion
- 40:: Internal flow path
- 41:: First flow path
- 42:: Second flow path
- 43:: Third flow path
- 44:: Fourth flow path
- 45:: Wheel cylinder port
- 46:: Bypass flow path
- 47:: Check valve
- 50:: Master cylinder
- 51:: Piston
- 52:: Reservoir tank
- 53:: Opening portion
- 54:: Lid
- 55:: Control valve
- 56:: Inlet valve
- 57:: Outlet valve
- 58:: Accumulator
- 59:: Pressure sensor
- 61:: First coil
- 62:: Second coil
- 63:: Terminal
- 64:: Terminal
- 70:: Control device
- 71:: Control board
- 72:: Operation determination control board
- 73:: Operation determination unit
- 74:: Control unit
- 75:: Signal output unit
- 80:: Housing
- 90:: Mounting portion
- 91:: Base portion
- 92:: Sandwiching portion
- 95:: Holding portion
- 96:: Holding plate
- 97:: Hole
- 100:: Brake system
- 101:: Liquid pipe
- 200:: Bicycle
- 210:: Frame
- 211:: Head tube
- 212:: Top tube
- 213:: Down tube
- 214:: Seat tube
- 215:: Stay
- 216:: Front fork
- 217:: Front wheel
- 218:: Saddle
- 219:: Pedal
- 220:: Rear wheel
- 221:: Brake lamp
- 230:: Turning portion
- 231:: Steering column
- 232:: Handle stem
- 233:: Handlebar
- 234:: Grip portion
- 241:: Brake lever
- 242:: Shaft portion
- 251:: Front wheel-side braking portion
- 252:: Rear wheel-side braking portion
- 253:: Wheel cylinder
- 254:: Rotor
- 260:: Power source unit
- 271:: Front wheel-side vehicle wheel speed sensor
- 272:: Rear wheel-side vehicle wheel speed sensor
- 280:: Other device control board

## Claims

1. A hydraulic pressure control device (1, 2) used in a brake system (100) capable of executing anti-lock brake control and mounted to a handlebar (233) of a straddle-type vehicle (200), the hydraulic pressure control device (1, 2) having a configuration in which a brake fluid released from a wheel cylinder (253) during pressure decrease in the anti-lock brake control is stored in an accumulator (58) and the brake fluid in the accumulator (58) is pumplessly discharged out of the accumulator (58) and comprising:
a master cylinder-integrated base body (10) where a piston mounting hole (21) where a piston (51) of a master cylinder (50) is provided so as to be capable of reciprocating, a reservoir tank (52) for brake fluid storage connected to the piston mounting hole (21), and an internal flow path (40) as a part of a brake fluid flow path allowing the piston mounting hole (21) and the wheel cylinder (253) to communicate with each other are formed;
an inlet valve (56) provided in an inlet valve mounting hole (24) formed in the base body (10) so as to be capable of reciprocating and opening and closing a part of the internal flow path (40) through which a brake fluid flowing from the piston mounting hole (21) to the wheel cylinder (253) passes; and
an outlet valve (57) provided in an outlet valve mounting hole (26) formed in the base body (10) so as to be capable of reciprocating and opening and closing a part of the internal flow path (40) through which a brake fluid flowing from the wheel cylinder (253) to the accumulator (58) passes,
wherein the inlet valve mounting hole (24) and the outlet valve mounting hole (26) are open on a second surface (12) in a case where a surface of the base body (10) where an opening portion (53) of the reservoir tank (52) is formed is a first surface (11) and a surface of the base body (10) opposite to the first surface (11) is the second surface (12),
**characterized in that**
the hydraulic pressure control device (1, 2) further comprises a pressure sensor (59) provided in a pressure sensor mounting hole (30) formed in the base body (10) and detecting pressure of a brake fluid in the internal flow path (40),
wherein the pressure sensor mounting hole (30) is open on the second surface (12).

2. The hydraulic pressure control device (1, 2) according to Claim 1, comprising:
a first coil (61) as a drive source for the inlet valve (56);
a second coil (62) as a drive source for the outlet valve (57);
a control board (71) electrically connected to the first coil (61) and the second coil (62) and controlling energization of the first coil (61) and the second coil (62); and
a housing (80) connected to the base body (10) and storing the first coil (61), the second coil (62), and the control board (71) inside.

3. The hydraulic pressure control device (1, 2) according to Claim 1 or 2, wherein a direction of arrangement of an opening portion (25) of the inlet valve mounting hole (24) and an opening portion (27) of the outlet valve mounting hole (26) on the second surface (12) is along a direction of extension of the piston mounting hole (21).

4. The hydraulic pressure control device (1, 2) according to Claim 1, wherein a direction of arrangement of an opening portion (25) of the inlet valve mounting hole (24), an opening portion (27) of the outlet valve mounting hole (26), and an opening portion (31) of the pressure sensor mounting hole (30) on the second surface (12) is along a direction of extension of the piston mounting hole (21).

5. The hydraulic pressure control device (1, 2) according to any one of Claim 1 to 4, wherein the pressure sensor (59) is configured to detect pressure of a brake fluid applying pressure to the wheel cylinder (253).

6. The hydraulic pressure control device (1, 2) according to Claim 5, wherein
a wheel cylinder port (45) to which a liquid pipe (101) communicating with the wheel cylinder (253) is connected is formed in the base body (10), and
the pressure sensor mounting hole (30), the outlet valve mounting hole (26), and the inlet valve mounting hole (24) are arranged in order of being away from the wheel cylinder port (45).

7. The hydraulic pressure control device (1, 2) according to any one of Claims 1 to 6, wherein
the accumulator (58) is formed in the base body (10), and
the accumulator (58) is disposed on a side opposite to an opening portion (23) of the piston mounting hole (21) with reference to a bottom portion (22) of the piston mounting hole (21).

8. The hydraulic pressure control device (1, 2) according to any one of Claims 1 to 7, wherein at least a part of a holding portion (95) of a brake lever (241) which a rider grips with his or her hand is integrally formed on the base body (10).

9. The hydraulic pressure control device (1, 2) according to any one of Claims 1 to 8, wherein the internal flow path (40) has a configuration in which a brake fluid in the accumulator (58) cannot be returned to the piston mounting hole (21) without passage through the outlet valve (57).

10. A straddle-type vehicle (200) comprising the hydraulic pressure control device (1, 2) according to any one of Claims 1 to 9.

11. The straddle-type vehicle (200) according to Claim 10, wherein the straddle-type vehicle (200) is a bicycle.

12. The straddle-type vehicle (200) according to Claim 10, wherein the straddle-type vehicle (200) is a motorcycle.

## Patentansprüche

1. Hydraulikdruck-Steuervorrichtung (1, 2), die in einem Bremssystem (100) verwendet wird, die eine Antiblockier-Bremssteuerung ausführen kann und die an einer Lenkstange (233) eines Fahrzeugs (200) des Spreizsitz-Typs angebracht ist, wobei die Hydraulikdruck-Steuervorrichtung (1, 2) eine Konfiguration aufweist, bei der ein Bremsfluid, das von einem Radzylinder (253) während einer Druckabnahme in der Antiblockier-Bremssteuerung freigesetzt wird, in einem Druckspeicher (58) gelagert wird, wobei das Bremsfluid in dem Druckspeicher (58) ohne Pumpen aus dem Druckspeicher (58) abgelassen wird, und die Folgendes umfasst:
einen in einen Hauptzylinder integrierten Basiskörper (10), in dem ein Kolbenaufnahmeloch (21), in dem ein Kolben (51) eines Hauptzylinders (50) so bereitgestellt ist, dass er sich hin und her bewegen kann, ein Lagertank (52) zur Lagerung des Bremsfluids, der mit dem Kolbenaufnahmeloch (21) verbunden ist, und ein interner Strömungsweg (40) als ein Teil eines Bremsfluid-Strömungswegs, der ermöglicht, dass das Kolbenaufnahmeloch (21) und der Radzylinder (253) miteinander in Verbindung stehen, ausgebildet sind;
ein Einlassventil (56), das in einem Einlassventil-Aufnahmeloch (24), das in dem Basiskörper (10) ausgebildet ist, bereitgestellt ist, so dass es sich hin und her bewegen kann und einen Teil des internen Strömungswegs (40), durch den ein Bremsfluid, das von dem Kolbenaufnahmeloch (21) zu dem Radzylinder (253) strömt, hindurchgeht, öffnen und schließen kann; und
ein Auslassventil (57), das in einem Auslassventil-Aufnahmeloch (26), das in dem Basiskörper (10) ausgebildet ist, bereitgestellt ist, so dass es sich hin und her bewegen kann und einen Teil des internen Strömungswegs (40), durch den ein Bremsfluid, das von dem Radzylinder (253) zu dem Druckspeicher (58) strömt, hindurchgeht, öffnen und schließen kann,
wobei das Einlassventil-Aufnahmeloch (24) und das Auslassventil-Aufnahmeloch (26) auf einer zweiten Oberfläche (12) in einem Fall offen sind, in dem eine Oberfläche des Basiskörpers (10), in der ein Öffnungsabschnitt (53) des Lagertanks (52) ausgebildet ist, eine erste Oberfläche (11) ist und eine Oberfläche des Basiskörpers (10), die der ersten Oberfläche (11) gegenüberliegt, die zweite Oberfläche (12) ist,
**dadurch gekennzeichnet, dass**
die Hydraulikdruck-Steuervorrichtung (1, 2) ferner einen Drucksensor (59) umfasst, der in einem Drucksensor-Aufnahmeloch (30) bereitgestellt ist, das in dem Basiskörper (10) ausgebildet ist, und der einen Druck eines Bremsfluids in dem internen Strömungsweg (40) detektiert,
wobei das Drucksensor-Aufnahmeloch (30) an der zweiten Oberfläche (12) offen ist.

2. Hydraulikdruck-Steuervorrichtung (1, 2) nach Anspruch 1, die Folgendes umfasst:
eine erste Spule (61) als Antriebsquelle für das Einlassventil (56);
eine zweite Spule (62) als Antriebsquelle für das Auslassventil (57);
eine Leiterplatte (71), die mit der ersten Spule (61) und der zweiten Spule (62) elektrisch verbunden ist und die Erregung der ersten Spule (61) und der zweiten Spule (62) steuert; und
ein Gehäuse (80), das mit dem Basiskörper (10) verbunden ist und die erste Spule (61), die zweite Spule (62) und die Leiterplatte (71) aufnimmt.

3. Hydraulikdruck-Steuervorrichtung (1, 2) nach Anspruch 1 oder 2, wobei eine Anordnungsrichtung eines Öffnungsabschnitts (25) des Einlassventil-Aufnahmelochs (24) und eines Öffnungsabschnitts (27) des Auslassventil-Aufnahmelochs (26) auf der zweiten Oberfläche (12) entlang einer Erstreckungsrichtung des Kolbenaufnahmelochs (21) verläuft.

4. Hydraulikdruck-Steuervorrichtung (1, 2) nach Anspruch 1, wobei eine Anordnungsrichtung eines Öffnungsabschnitts (25) des Einlassventil-Aufnahmelochs (24), eines Öffnungsabschnitts (27) des Auslassventil-Aufnahmelochs (26) und eines Öffnungsabschnitts (31) des Drucksensor-Aufnahmelochs (30) auf der zweiten Oberfläche (12) entlang einer Erstreckungsrichtung des Kolbenaufnahmelochs (21) verläuft.

5. Hydraulikdruck-Steuervorrichtung (1, 2) nach einem der Ansprüche 1 bis 4, wobei der Drucksensor (59) konfiguriert ist, einen Druck eines Bremsfluid-Anwendungsdrucks auf den Radzylinder (253) zu detektieren.

6. Hydraulikdruck-Steuervorrichtung (1, 2) nach Anspruch 5, wobei
eine Radzylinderöffnung (45), mit der ein Flüssigkeitsrohr (101), das mit dem Radzylinder (253) in Verbindung steht, verbunden ist, in dem Basiskörper (10) ausgebildet ist, und
das Drucksensor-Aufnahmeloch (30), das Auslassventil-Aufnahmeloch (26) und das Einlassventil-Aufnahmeloch (24) in der Reihenfolge angeordnet sind, in der sie von der Radzylinderöffnung (45) entfernt sind.

7. Hydraulikdruck-Steuervorrichtung (1, 2) nach einem der Ansprüche 1 bis 6, wobei
der Druckspeicher (58) in dem Basiskörper (10) ausgebildet ist und
der Druckspeicher (58) auf einer Seite angeordnet ist, die dem Öffnungsabschnitt (23) des Kolbenaufnahmelochs (21) bezüglich eines unteren Abschnitts (22) des Kolbenaufnahmelochs (21) gegenüberliegt.

8. Hydraulikdruck-Steuervorrichtung (1, 2) nach einem der Ansprüche 1 bis 7, wobei wenigstens ein Teil eines Halteabschnitts (95) eines Bremshebels (241), den ein Fahrer mit seiner Hand ergreift, mit dem Basiskörper (10) einteilig ausgebildet ist.

9. Hydraulikdruck-Steuervorrichtung (1, 2) nach einem der Ansprüche 1 bis 8, wobei der interne Strömungsweg (40) eine Konfiguration aufweist, bei der ein Bremsfluid in dem Druckspeicher (58) ohne einen Durchgang durch das Auslassventil (57) nicht zu dem Kolbenaufnahmeloch (21) zurückgeführt werden kann.

10. Fahrzeug (200) des Spreizsitz-Typs, das die Hydraulikdruck-Steuervorrichtung (1, 2) nach einem der Ansprüche 1 bis 9 umfasst.

11. Fahrzeug (200) des Spreizsitz-Typs nach Anspruch 10, wobei das Fahrzeug (200) des Spreizsitz-Typs ein Fahrrad ist.

12. Fahrzeug (200) des Spreizsitz-Typs nach Anspruch 10, wobei das Fahrzeug (200) des Spreizsitz-Typs ein Kraftrad ist.

## Revendications

1. Dispositif de régulation de pression hydraulique (1, 2) utilisé dans un système de frein (100) apte à exécuter une commande de freinage antiblocage et monté sur un guidon (233) d'un véhicule à selle (200), le dispositif de régulation de pression hydraulique (1, 2) ayant une configuration dans laquelle un liquide de frein libéré d'un cylindre de roue (253) pendant une diminution de pression dans la commande de freinage antiblocage est stocké dans un accumulateur (58) et le liquide de frein dans l'accumulateur (58) est déchargé sans pompage hors de l'accumulateur (58) et comprenant :
un corps de base intégré au maître-cylindre (10) où un trou de montage de piston (21) où un piston (51) d'un maître-cylindre (50) est fourni de manière à pouvoir effectuer un mouvement de va-et-vient, un réservoir (52) pour le stockage de liquide de frein relié au trou de montage de piston (21), et un trajet d'écoulement interne (40) faisant partie d'un trajet d'écoulement de liquide de frein permettant au trou de montage de piston (21) et au cylindre de roue (253) de communiquer l'un avec l'autre sont formés ;
une soupape d'entrée (56) fournie dans un trou de montage de soupape d'entrée (24) formé dans le corps de base (10) de manière à pouvoir effectuer un mouvement de va-et-vient et ouvrir et fermer une partie du trajet d'écoulement interne (40) à travers lequel passe un liquide de frein s'écoulant du trou de montage de piston (21) au cylindre de roue (253) ; et
une soupape de sortie (57) fournie dans un trou de montage de soupape de sortie (26) formé dans le corps de base (10) de manière à pouvoir effectuer un mouvement de va-et-vient et ouvrir et fermer une partie du trajet d'écoulement interne (40) à travers lequel passe un liquide de frein s'écoulant du cylindre de roue (253) à l'accumulateur (58),
dans lequel le trou de montage de soupape d'entrée (24) et le trou de montage de soupape de sortie (26) sont ouverts sur une seconde surface (12) dans un cas où une surface du corps de base (10) où une partie d'ouverture (53) du réservoir (52) est formée est une première surface (11) et une surface du corps de base (10) opposée à la première surface (11) est la seconde surface (12),
**caractérisé en ce que**
le dispositif de régulation de pression hydraulique (1, 2) comprend en outre un capteur de pression (59) fourni dans un trou de montage de capteur de pression (30) formé dans le corps de base (10) et détectant une pression d'un liquide de frein dans le trajet d'écoulement interne (40),
dans lequel le trou de montage de capteur de pression (30) est ouvert sur la seconde surface (12).

2. Dispositif de régulation de pression hydraulique (1, 2) selon la revendication 1, comprenant :
une première bobine (61) comme source d'entraînement pour la soupape d'entrée (56) ;
une seconde bobine (62) comme source d'entraînement pour la soupape de sortie (57) ;
une carte de circuit imprimé (71) reliée électriquement à la première bobine (61) et à la seconde bobine (62) et commandant l'excitation de la première bobine (61) et de la seconde bobine (62) ; et
un boîtier (80) relié au corps de base (10) et stockant la première bobine (61), la seconde bobine (62), et la carte de circuit imprimé (71) en son sein.

3. Dispositif de régulation de pression hydraulique (1, 2) selon la revendication 1 ou 2, dans lequel une direction d'agencement d'une partie d'ouverture (25) du trou de montage de soupape d'entrée (24) et d'une partie d'ouverture (27) du trou de montage de soupape de sortie (26) sur la seconde surface (12) est le long d'une direction d'extension du trou de montage de piston (21).

4. Dispositif de régulation de pression hydraulique (1, 2) selon la revendication 1, dans lequel une direction d'agencement d'une partie d'ouverture (25) du trou de montage de soupape d'entrée (24), d'une partie d'ouverture (27) du trou de montage de soupape de sortie (26), et d'une partie d'ouverture (31) du trou de montage de capteur de pression (30) sur la seconde surface (12) est le long d'une direction d'extension du trou de montage de piston (21).

5. Dispositif de régulation de pression hydraulique (1, 2) selon l'une quelconque des revendications 1 à 4, dans lequel le capteur de pression (59) est configuré pour détecter une pression d'un liquide de frein appliquant une pression au cylindre de roue (253).

6. Dispositif de régulation de pression hydraulique (1, 2) selon la revendication 5, dans lequel un orifice de cylindre de roue (45) auquel un tuyau de liquide (101) communiquant avec le cylindre de roue (253) est relié est formé dans le corps de base (10), et
le trou de montage de capteur de pression (30), le trou de montage de soupape de sortie (26), et le trou de montage de soupape d'entrée (24) sont agencés afin d'être éloignés de l'orifice de cylindre de roue (45).

7. Dispositif de régulation de pression hydraulique (1, 2) selon l'une quelconque des revendications 1 à 6, dans lequel
l'accumulateur (58) est formé dans le corps de base (10), et
l'accumulateur (58) est disposé sur un côté opposé à une partie d'ouverture (23) du trou de montage de piston (21) par rapport à une partie inférieure (22) du trou de montage de piston (21).

8. Dispositif de régulation de pression hydraulique (1, 2) selon l'une quelconque des revendications 1 à 7, dans lequel au moins une partie d'une partie de support (95) d'une poignée de frein (241) qu'un conducteur saisit avec sa main est formée d'un seul tenant sur le corps de base (10).

9. Dispositif de régulation de pression hydraulique (1, 2) selon l'une quelconque des revendications 1 à 8, dans lequel le trajet d'écoulement interne (40) a une configuration dans laquelle un liquide de frein dans l'accumulateur (58) ne peut pas être renvoyé vers le trou de montage de piston (21) sans passage à travers la soupape de sortie (57).

10. Véhicule à selle (200) comprenant le dispositif de régulation de pression hydraulique (1, 2) selon l'une quelconque des revendications 1 à 9.

11. Véhicule à selle (200) selon la revendication 10, dans lequel le véhicule à selle (200) est une bicyclette.

12. Véhicule à selle (200) selon la revendication 10, dans lequel le véhicule à selle (200) est une motocyclette.
